# EUROPÄISCHE PATENTANMELDUNG

(11) **EP 3 910 006 A1**
(43) Veröffentlichungstag der Anmeldung: **17.11.2021**
(21) Anmeldenummer: 21173384.5
(22) Anmeldetag: 11.05.2021
(51) Int. Cl.: C08J 3/12, C08L 3/02, B29B 9/12, B29B 9/14, B29B 9/16, B29B 7/00, B29B 7/90, A23L 27/10, A23L 29/206, A23L 29/269, A23P 30/20

(54) **ERSATZ FÜR KNOCHEN, GRÄTEN UND SCHALEN VON MEERESFRÜCHTEN AUS REIN PFLANZLICHEN BESTANDTEILEN; VERWENDUNG DES ERSATZES FÜR KNOCHEN, GRÄTEN, UND SCHALEN FÜR VEGANE UND VEGETARISCHE FLEISCH- ODER FISCHGERICHTE; GRANULAT ZUR HERSTELLUNG VEGANER UND KOMPOSTIERBARER KNOCHEN, GRÄTEN UND SCHALEN VON MEERESFRÜCHTEN, SOWIE HERSTELLUNGSVERFAHREN DES GRANULATS UND DARAUS ZU ERHALTENDEN VEGANEN UND KOMPOSTIERBAREN, GRÄTEN UND SCHALEN VON MEERESFRÜCHTEN**

(30) Priorität: 17.12.2020 DE 202020107372 U; 17.12.2020 DE 202020107373 U; 17.12.2020 DE 202020107374 U; 11.05.2020 EP 20173968; 17.12.2020 EP 20215225; 13.08.2020 WO PCT/EP2020/072820
(71) Anmelder: Hope Tree International GmbH, 83607 Holzkirchen (DE); Hope Tree Holding GmbH, 82538 Geretsried-Gelting (DE)
(72) Erfinder: Dinzinger, Lambert Dustin, 82538 Geretsried-Gelting (DE)
(74) Vertreter: Grund, Martin

(57) **Zusammenfassung**

Die vorliegende Erfindung liegt auf dem Gebiet der nicht-tierischen, veganen oder vegetarischen Lebensmittel, genauer auf dem Gebiet von vegetarischem oder veganem Fleischersatz und Fischersatz. Die Erfindung betrifft die Bereitstellung von veganem Ersatz für Knochen, Gräten oder Schalen von Meeresfrüchten, welche auf dem Gebiet des veganen oder vegetarischen Fleischersatz oder Fischersatz Verwendung finden. Die vorliegende Erfindung liegt auf dem Gebiet der biologisch abbaubaren und kompostierbaren Materialien und daraus hergestellten Produkten. Dies umfasst insbesondere biologisch abbaubares und kompostierbares Material in Form von Granulat, welches zur Herstellung von Ersatz für Knochen, Gräten oder Schalen von Meeresfrüchten verwendet werden kann. Unter Verwendung von pflanzlicher Stärke und pflanzlichem Dickungs- und Geliermittel in einem bestimmten Mengenverhältnis kann biologisch abbaubares und sogar gartenkompostierbares Granulat hergestellt werden.

## Beschreibung

### I. Gebiet der Erfindung

Die vorliegende Erfindung liegt auf dem Gebiet der nicht-tierischen, veganen oder vegetarischen Lebensmittel, genauer auf dem Gebiet von vegetarischem oder veganem Fleischersatz und Fischersatz. Die Erfindung betrifft die Bereitstellung von veganem Ersatz für Knochen, Gräten oder Schalen von Meeresfrüchten, welche auf dem Gebiet des veganen oder vegetarischen Fleischersatz oder Fischersatz Verwendung finden. Die vorliegende Erfindung betrifft ferner biologisch abbaubare und kompostierbare Materialien und daraus hergestellten Ersatz für Knochen, Gräten oder Schalen von Meeresfrüchten. Dies umfasst insbesondere biologisch abbaubares und kompostierbares Material in Form von Granulat, welches zur Herstellung von Ersatz für Knochen, Gräten oder Schalen von Meeresfrüchten verwendet werden kann. Unter Verwendung von pflanzlicher Stärke und pflanzlichem Dickungs- und Geliermittel in einem bestimmten Mengenverhältnis kann biologisch abbaubares und sogar gartenkompostierbares Granulat hergestellt werden. Die Zugabe von Glycerin, Sorbit, pflanzlichen Fasern (wie Strohfasern, Grasfasern, etc.), Zellstoff, Holzstoff, Stearat, Öl, Naturlatex insbesondere Naturkautschuk und/oder Wachs, insbesondere Rapswachs oder Sojawachs, kann dem Granulat weitere vorteilhafte Eigenschaften verleihen. Das Granulat lässt sich leicht im Spritzguss verarbeiten. Hierbei können sehr harte und Formbeständige, dennoch kompostierbare Produkte spritzgegossen werden.

Die vorliegende Erfindung ist im Speziellen auf die Verarbeitung des hierin beschriebenen, rein natürlichen und veganen, bevorzugt rein pflanzlichen Granulats zu Ersatz von tierischen Knochen und Gräten sowie von Schalen von Meeresfrüchten wie Garnelen oder Hummer gerichtet. Umfasst sind vegane Knochen für die Verwendung von "Chicken Wings", "Hähnchenschlegel", "T-Bone Steak", "Spareribs", "Fleischkeule", "Scampis", "Hummer", aber auch Teile von oder Ganze Skelette für Fisch, Hähnchen, Ente, Pute, Truthahn oder dergleichen als Ganzes.

### II. Hintergrund der Erfindung

Täglich werden Millionen von Tieren für Nahrung getötet. Dies ist nicht nur schlecht für die Tierwelt, sondern auch für den Erhalt unseres Ökosystems. Allein in Deutschland wurden im Jahr 2019 laut dem Statistischem Bundesamt (Destatis) durchschnittlich pro Tag eine Anzahl von 1.700.185 Hühner, 151.219 Schweine, 93.770 Truthennen, 43.497 Enten, 9.348 Rinder und Kälber, 3.149 Schafe und Lämmer, 68 Ziegen und 14 Pferde getötet. Bis zum Jahr 2050 wird die menschliche Bevölkerung auf rund 9,6 Milliarden ansteigen. Hier muss sich die Frage gestellt werden, ob unser Planet in der Lage sein wird, so viele weitere Menschen zu beherbergen und ob es überhaupt machbar ist genug Nahrung für eine so große Bevölkerungsanzahl zu produzieren.

Laut einer neuen Studie des UN-Umweltprogramms (UNEP) beansprucht die Tierhaltung weltweit mittlerweile 78% der landwirtschaftlichen Nutzfläche. Die fortschreitende Ausdehnung der Acker- und Weideflächen zerstört natürliche Lebensräume und geht zu Lasten der Biodiversität. Dünger und Pestizide verschärfen die Situation weiter. Zudem tragen die aus der Tierhaltung resultierenden Treibhausgasemissionen in nicht unerheblichem Maße zum Klimawandel bei. Die Viehzucht erzeugt mittlerweile rund 14,5 Prozent der globalen Treibhausgasemissionen. Um effektiv gegenzusteuern ist laut der UNEP-Studie "Food system impacts on biodiversity loss" eine stärker pflanzenbasierte Ernährung und eine Umstellung der Lebensmittelproduktion notwendig.

Glücklicherweise erfuhr der vegane und vegetarische Lebensstil in den letzten Jahren einen großen Zuwachs. Allein in Deutschland essen rund 8 Millionen kein Fleisch/Fisch, davon leben circa 1,5 Millionen Menschen vegan. Auch in anderen Ländern der Erde ist der Trend der fleischlosen Ernährung deutlich spürbar. So leben in Indien beispielsweise rund 38% der Gesamtbevölkerung vegetarisch. Aber auch generell wird beim Kauf von Fleisch und Fischprodukten heute bewusster auf die Herkunft und Haltung der Tiere geachtet, was nicht zuletzt dazu führt, dass immer mehr Menschen zu pflanzlichen Alternativen zu Fleisch und Fisch greifen. Entsprechend veränderte sich die Nachfrage an Tofu-Würstchen, pflanzlichen Aufstrichen aber auch anderen Ersatzprodukten wie Sojamilch. Als Grund für die bewusste Entscheidung gegen den Verzehr von Fleisch und Fleischprodukten und für die Wahl pflanzlicher Fleisch-und Fisch-Alternativen wird oftmals Umweltschutz, Tierwohl, und vor allem die eigene Gesundheit genannt. Auch hat sich in der ökologischen Lebensmittelbranche der Begriff "Lifestyle of Health and Sustainability - LOHAS" gefestigt.

Die Grundstoffe für bisher existierenden Fleischersatz sind Soja, Lupinen, das japanische Weizengemisch Seitan oder auch Erbsen. Beträchtliches Aufsehen erfuhren auch die Fleischalternativen aus der Petrischale. Experten gehen davon aus, dass in zwanzig Jahren die Ernährung völlig anders aussieht als heute. Es wird kaum noch echtes Fleisch verzehrt werden, stattdessen liegen gezüchtete Steaks aus Bakterien auf den Tellern.

Um die pflanzlichen Fleisch- und Fisch-Alternativen noch "echter" wirken zu lassen, bzw. diese für die volle Auswahl hinter der "Fleischtheke" anbieten zu können umfassend die in der breiten Bevölkerung sehr beliebten Hähnchenschenkel /"Chicken Wings", "T-Bone Steaks" oder "Rippchen/Spareribs" fehlt jedoch eines: Knochen.

Infolgedessen ist der Bedarf an einer tierlosen, umweltfreundlichen und kompostierbaren Alternative zu herkömmlichem Lebensmittel mit Knochen, Gräten und Schalen für die Herstellung diverser Lebensmittel-Produkte enorm.

Die vorliegende Erfindung löst dieses Problem. Durch Verarbeitung des hierin beschriebenen Granulats im Spritzguss können allerlei Arten und Formen von Knochen, Gräten und Schalen von Meeresfrüchten nachgebildet werden. Der Fleischersatz, sei er aus pflanzlichen Materialien oder aus der Petrischale, kann mit den hierin bereitgestellten veganen und kompostierbaren Knochen, Gräten oder Schalen verbunden werden, um Alternativ-Produkte in veganer oder vegetarischer Form anzubieten. Durch die Zugabe entsprechender Aromen, erhält der vegane Knochenersatz einen Geschmack von Knochenmark.

Das Granulat zur Herstellung der Knochen, Gräten und Schalen von Meeresfrüchten der vorliegenden Erfindung bietet eine nachhaltige Alternative zu Kunststoffgranulat und den daraus gewonnenen Produkten, samt Verfahren zu deren Herstellung. Im Gegensatz zu herkömmlichen Kunststoffgranulaten und daraus hergestellten Produkten, besteht das erfindungsgemäße Granulat und die daraus hergestellten Knochen, Gräten und Schalen aus rein natürlichen und veganen, bevorzugt rein pflanzlichen, unbehandelten Materialen, insbesondere pflanzlicher Stärke und pflanzlichem Dickungs- und/oder Geliermittel, sowie optional aus pflanzlichen Biopolymeren, pflanzlichen Konservierungsstoffen und pflanzlichen Wachsen. Dass das vorliegende Granulat und entsprechend die daraus hergestellten Knochen, Gräten und Schalen kein Kunststoff enthalten, wurde von einer unabhängigen Prüfstelle bestätigt. Das Granulat und die daraus hergestellten Knochen- und Gräten-Produkte sind nicht nur leicht zu recyceln bzw. zu kompostieren, sie werden auch aus nachwachsenden Rohstoffen produziert, die eine positive CO₂-Bilanz aufweisen.

### III. Zusammenfassung der Erfindung

Die vorliegende Erfindung bezieht sich auf Ersatz für Knochen, Gräten und Schalen von Meeresfrüchten. Der Ersatz für Knochen, Gräten und Schalen von Meeresfrüchten ist vegan und wird aus rein pflanzlichen Materialien hergestellt. Die Erfindung bezieht sich zudem auf die Verwendung des Ersatzes für Knochen, Gräten und Schalen von Meeresfrüchten in veganen oder vegetarischen Fleischersatzgerichten oder Fischersatzgerichten. Die veganen Knochen, Gräten und Schalen von Meeresfrüchten werden im Spritzgussverfahren, bevorzugt unter Verwendung des hierin beschriebenen Granulats, hergestellt. Die vorliegende Erfindung bezieht sich demnach auch auf ein Verfahren zur Herstellung der veganen Knochen, Gräten und Schalen von Meeresfrüchten. Die Erfindung wird durch die Ansprüche definiert und wird im Folgenden zusammengefasst.

Die Erfindung betrifft Ersatz für Knochen, Gräten und Schalen von Meeresfrüchten. Diese Knochen, Gräten und Schalen von Meeresfrüchten sind vegan und bestehen aus rein pflanzlichen Materialien.

Der Ersatz von Knochen, Gräten und Schalen von Meeresfrüchten besteht aus einer Zusammensetzung aus

| | |
|---|---|
| Pflanzliche Stärke und/oder | |
| Pflanzlichem Mehl | 40-60% |
| Pflanzliches Dickungs- und/oder | |
| Geliermittel | 40-60% |
| Optionale Zusätze | 0-20%. |

In einer bevorzugten Ausführungsform weist der Ersatz von Knochen, Gräten und Schalen von Meeresfrüchten eine Zusammensetzung bestehend aus

| | |
|---|---|
| Pflanzliche Stärke und/oder | |
| Pflanzliches Mehl | 40-50% |
| Pflanzliches Dickungs- und/oder | |
| Geliermittel | 40-50% |
| Optionale Zusätze | 0-20%. |

Die pflanzliche Stärke ist native, unbehandelte Stärke und umfasst Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote oder eine Mischung, bevorzugt Weizenstärke, Kartoffelstärke, Maisstärke, Reisstärke, Tapiokastärke oder eine Mischung davon. Bevorzugt ist die pflanzliche Stärke Weizenstärke, Kartoffelstärke oder Maisstärke. Alternativ kann die pflanzliche Stärke durch pflanzliches Mehl, bevorzugt Weizenmehl oder Maismehl teilweise oder gänzlich ersetzt werden.

Das pflanzliche Dickungs- und/oder Geliermittel im Granulat umfasst Guarkernmehl, pflanzliches Xanthan Gum, Teufelszunge, Agar-Agar, Pektin, Carrageen, Alginat, Johannisbrotkernmehl, Sago, Gummi Arabicum, Reismehl, Hartweizenmehl oder Hartweizengrieß oder eine Mischung davon. Bevorzugt ist das Dickungs- und/oder Geliermittel eine Mischung aus Guarkernmehl und pflanzlichem Xanthan Gum.

Die optionalen Zusätze im Granulat umfassen pflanzliches Glycerin und/oder Sorbit, Zellstoff, Holzstoff, pflanzliche Fasern, Wachs, Naturkautschuk, Biopolymer, pflanzliches Öl, Konservierungsstoffe, Essig, Lecithin, pflanzliches Stearat, Lebensmittelfarbe, Aromen, Duftstoffe und eine Mischung davon.

Die Aromen umfassen Aromen für einen leicht nussigen und mild würzigen Geschmack von Knochenmark und werden aus kalziumreichen Gemüsesorten wie Grünkohl, Brokkoli, Rucola, Tofu, angereicherter Pflanzenmilch, kalziumreiche Mineralwasser, Mandeln und Mandelmus, Sesam und Tahin, Mohn, getrocknete Feigen, Amarant gewonnen.

Die optionalen Zusätze umfassen demnach auch Extrakte aus Grünkohl, Brokkoli, Rucola, Spinat, Mangold, Basilikum, Petersilie, Tofu, angereicherte Pflanzenmilch, kalziumreiches Mineralwasser, Nüsse umfassend Pistazien, Haselnüsse, Mandeln und Mandelmus, Getreide und Pseudogetreide wie Sesam, Leinsamen und Tahin, Haferflocken, Hirse, Amarant, Quinoa, Mohn, Hülsenfrüchte wie Soja, Mungobohne, Kichererbse, weiße Bohne, und getrocknete Früchte umfassend Feigen und Aprikosen. Bevorzugte Aromen sind Extrakte aus Spinat, Brokkoli, Sesam, Kürbiskerne, Leinsamen

Der Ersatz für Knochen, Gräten und Schalen von Meerestieren umfasst kein Bioplastik, keine chemisch veränderten (Bio-)Polymere umfassend biobasierte Polymere umfassend Polylactid (PLA), Polyhydoxyalkanoate (PHA), Polyhydroxybutyrat (PHB), und keine erdölbasierten Biopolymere.

Die Stärke und das Dickungs-und/oder Geliermittel liegen bevorzugt im Verhältnis 1:1 vor.

Der Ersatz für Knochen, Gräten und Schalen von Meeresfrüchten besteht aus rein pflanzlichen Bestandteilen.

Der Ersatz für Knochen, Gräten und Schalen für Meeresfrüchte ist für den Hautkontakt und Lebensmittelkontakt geeignet.

Der Ersatz für Knochen, Gräten und Schalen für Meeresfrüchte ist bevorzugt bruch- und zugfest sowie hochtemperaturbeständig. Zudem weist der Ersatz für Knochen, Gräten und Schalen für Meeresfrüchte bevorzugt eine Resistenz gegen Wasser, Fette und Öle auf.

Zudem ist der Ersatz für Knochen, Gräten und Schalen für Meeresfrüchte bevorzugt gartenkompostierbar, noch bevorzugter ultrakompostierbar.

Der Ersatz für Knochen, Gräten und Schalen von Meeresfrüchten umfasst kein Bioplastik, keine chemisch veränderten (Bio-)Polymere umfassend biobasierte Polymere umfassend Polylactid (PLA), Polyhydoxyalkanoate (PHA), Polyhydroxybutyrat (PHB), und keine erdölbasierten Biopolymere.

Die Erfindung betrifft ferner die Verwendung des Ersatzes für Kochen, Gräten und Schalen von Meeresfrüchten für vegane oder vegetarische Fleischersatzprodukte oder Fischersatzprodukte. Solche Fleischersatzprodukte umfassen vegetarische oder vegane Chicken Wings, T Bone Stake, Spareribs, Rippchen, Keulen und Haxen und dergleichen. Die Fischersatzprodukte umfassen vegane oder vegetarische Scampi, Garnelen Langusten, Hummer und dergleichen aber auch Fischfilets und ganzen Fisch.

Die Knochen, Gräten oder Schalen von Meeresfrüchten werden im Spritzgussverfahren hergestellt.

Die Erfindung betrifft ferner ein Verfahren zur Herstellung von Ersatz für Knochen, Gräten oder Schalen von Meeresfrüchten umfassend die Schritte
1) Herstellung von Granulat umfassend die Schritte:
a) Herstellen einer Mischung bestehend aus festen und flüssigen Bestandteilen, wobei die Mischung besteht aus

| | |
|---|---|
| Pflanzliche Stärke und/oder | |
| Pflanzliches Mehl | 40-50% |
| Pflanzliches Dickungs- und/oder | |
| Geliermittel | 40-50% |
| Optionale Zusätze | 0-20% |

Bezogen auf das Gewicht der Masse zusätzlich:

| | |
|---|---|
| Flüssige Bestandteile umfassend | |
| optionale Zusätze | 0-20% und |
| Wasser | 30-60%; |

b) Verdichten der Masse und Formen eines Strangs;
c) Aushärten und Entfeuchten des in Schritt b) erzeugten Strangs, wobei im Strang eine Restfeuchte von 10-30%, bevorzugt 15-22% zurück bleibt;
d) Schneiden des in c) erzeugten Strangs zu Granulat;
e) optional Lagern des hergestellten Granulats
2. Formen von Knochen, Gräten oder Schalen von Meeresfrüchten im Spritzguss umfassend die Schritte
a) Füllen des Granulats aus Schritt 1) in eine Spritzguss-Anlage
b) Formen der Knochen, Gräten oder Schalen für Meeresfrüchte
c) Auswerfen der ausgekühlten und erstarrten Formen aus Schritt 2)b).

Bevorzugt werden in Schritt 1)a) die festen Bestandteile und die flüssigen Bestandteile zunächst getrennt voneinander gemischt und anschließend die Mischung der festen Bestandteile mit der Mischung der flüssigen Bestandeile gemischt.

In einer bevorzugten Ausführungsform des Verfahrens zur Herstellung von Granulat umfasst die Mischung in Schritt 1)a):

| | |
|---|---|
| Pflanzliche Stärke und/oder | |
| Pflanzliches Mehl | 45-50% |
| Pflanzliches Dickungs- und/oder | |
| Geliermittel | 45-50% |
| Optionale feste Zusätze | 0-10% |

Bezogen auf das Gewicht der Masse zusätzlich:

| | |
|---|---|
| Flüssige Bestandteile | |
| umfassend | |
| Optionale flüssige Zusätze | 0-10% |
| Wasser | 40-50% |

In einer noch bevorzugteren Ausführungsform des Verfahrens zur Herstellung von Granulat umfasst die Mischung in Schritt 1)a):

| | |
|---|---|
| Weizenstärke | 50% |
| Guarkernmehl | 45% |
| Xanthan Gum | 5% |

Bezogen auf das Gewicht der Masse zusätzlich:

| | |
|---|---|
| Wasser | 40% |
| Pflanzliches Glycerin | 5% |
| Rapsöl | 4% |
| Pflanzlicher Farbstoff | 0,25% |
| Pflanzliches | |
| Eisenbisglycinat | 1% |

Optional kann im Verfahren zur Herstellung von Granulat Schritt 1)d) vor Schritt 1)c) erfolgen.

Optional erfolgt Schritt 1)b) in einem Schnecken-Extruder.

Schritte 1) und 2) können getrennt voneinander durchgeführt werden. Bevorzugt wird das hergestellte Granulat gelagert und bei Bedarf zur Herstellung von Ersatz von Knochen, Gräten und Schalen von Meeresfrüchten bereitgestellt.

Umfasst ist auch ein Verfahren zur Herstellung von Ersatz für Knochen, Gräten oder Schalen von Meeresfrüchten umfassend die Schritte
a) Bereitstellen von Granulat bestehend aus

| | |
|---|---|
| Pflanzliche Stärke und/oder | |
| Pflanzlichem Mehl | 40-50% |
| Pflanzlichem Dickungs- und/oder | |
| Geliermittel | 40-50% |
| Optionale pflanzliche Zusätze | 0-20% |

mit einer Restfeuchte von 10-30%, bevorzugt 15-22%
b) Füllen des Granulats aus Schritt a) in eine Spritzguss-Anlage
c) Formen der Knochen, Gräten oder Schalen für Meeresfrüchte
d) Auswerfen der ausgekühlten und erstarrten Formen aus Schritt c).

Das Verfahren zur Herstellung von Ersatz für Knochen, Gräten und Schalen für Meeresfrüchte unter Verwendung des beschriebenen Granulats umfasst die Verarbeitung des Granulats im Spritzgussverfahren.

Das Verfahren zur Herstellung von Ersatz für Knochen, Gräten und Schalen für Meeresfrüchte, wobei neben dem Granulat keine weiteren Zusätze zur Herstellung der Knochen, Gräten und Schalen für Meeresfrüchtebenötigt wird, optional aber Duftstoffe und/oder Farbstoffe und/oder Aromen beigefügt werden können.

Das Ausgangsmaterial zur Herstellung von Ersatz für Knochen, Gräten und Schalen für Meeresfrüchte im Spritzgussverfahren umfasst in einer Ausführungsform das hierin beschriebene Granulat.

Das Ausgangsmaterial zur Herstellung von Ersatz für Knochen, Gräten und Schalen für Meeresfrüchte im Spritzgussverfahren besteht in einer Ausführungsform aus Granulat.

Das Ausgangsmaterial zur Herstellung von Ersatz für Knochen, Gräten und Schalen für Meeresfrüchte im Spritzgussverfahren besteht in einer bevorzugten Ausführungsform aus Granulat und einem weiteren Zusatz ausgewählt aus der Gruppe bestehend aus einem oder mehreren Duftstoffen, einem oder mehreren Farbstoffen, einem oder mehreren Aromen.

Das Granulat kann im Spritzgussverfahren verarbeitet werden, wobei die Verarbeitung im Spritzgussverfahren bei Temperaturen zwischen 50°C und 100°C erfolgt.

Die Erfindung umfasst ferner Granulat zur Herstellung von Ersatz von Knochen, Gräten und Schalen von Meerestieren.

Das Granulat zur Herstellung von Ersatz von Knochen, Gräten und Schalen von Meerestieren besteht aus rein pflanzlichen Bestandteilen. Bevorzugt besteht das Granulat aus einer Feststoffzusammensetzung aus

| | |
|---|---|
| Pflanzliche Stärke und/oder | |
| Pflanzlichem Mehl | 40-50% |
| Pflanzlichem Dickungs- und/oder | |
| Geliermittel | 40-50% |
| Optionale pflanzliche Zusätze | 0-20% |

und weist eine Restfeuchte von 10-30%, bevorzugt 15-22% auf.

Zudem ist das Granulat gartenkompostierbar, bevorzugt ultrakompostierbar.

### IV. Vorteile der Erfindung

Die erfindungsgemäßen Knochen oder Gräten können in vielseitiger Art und Weise geformt sein und somit für sämtliche vegane und vegetarische Fleischersatz- oder Fischersatz-Produkte besonders Fleischersatz- oder Fischersatzgerichte verwendet werden. Dies hat den Vorteil, dass bisherige Fleischersatz- und Fischersatz-Produkte noch "echter" gestaltet werden können, und neue, noch nicht existierende vegane Alternativen wie pflanzliche Rippchen oder Chicken Wings hergestellt werden können.

Durch die Verwendung der pflanzlichen Rohstoffe Stärke (z.B. Weizenstärke), Dickungs- und/oder Geliermittel (z.B. eine Mischung aus Guarkernmehl und Xanthan), sowie optionalen Zusätzen wie pflanzliche Fasern sind die erzeugten Knochen- und Gräten-Produkte der vorliegenden Erfindung, recycelbar, vollständig biologisch abbaubar und natürlich kompostierbar. Die Kompostierdauer eines Knochens, welcher aus hierin beschriebenem Granulat hergestellt wurde, wurde ermittelt. Die Testung ergab eine Kompostierdauer des Trinkhalms von unter vier Wochen in der Intensivrotte. Ferner ist das hierin beschriebene Granulat und der daraus hergestellte Ersatz für Knochen, Gräten und Schalen der vorliegenden Erfindung gemäß EN 13432, Version 2000-12 kompostierbar. Der Ersatz für Knochen, Gräten und Schalen ist auch gartenkompostierbar. Zudem ist der Ersatz für Knochen, Gräten und Schalen ultrakompostierbar, also in weniger als 50 Tagen kompostiert. Dies gilt zum Beispiel nicht für Bioplastik/Biokunststoff wie PLA. Zudem wurden Gebrauchsgegenstände hergestellt aus dem vorliegenden Granulat von einer zuständigen Behörde (DEKRA e.V.) als Lebensmittelecht getestet.

Die pflanzliche Stärke wird als Naturprodukt, also in natürlicher, nicht modifizierter und nicht behandelter Form eingesetzt und wird auch während des Herstellungsvorgangs zu Granulat nicht chemisch verändert. Dies schont die Umwelt und macht das Granulat und die daraus entstehenden Produkte noch natürlicher. Auch das im Herstellungsprozess entstehende Extrudat, welches getrocknet und zu Granulat geschnitten wird, wird nicht chemisch/physikalisch nachbehandelt, um es zu verfestigen und/oder zu stabilisieren. Ebenso wird ein Knochen nach seiner Herstellung im Spritzguss nicht chemisch/physikalisch nachbehandelt, um ihn zu verfestigen und/oder zu stabilisieren.

Das vorliegende Granulat sowie die daraus hergestellten Produkte umfassen ferner keine Biokunststoffe, keine biobasierten Kunststoffe und keine erdölbasierten Biopolymere. Unter Biokunstsoffen werden alle Biopolymere die durch chemische Veränderung der natürlichen und/oder pflanzlichen Rohstoffe gewonnen werden verstanden. Auch bestimmte erdölbasierte Polymere sind biologisch abbaubar und daher per Definition "Biopolymere". Erdölbasiere Polymere umfassen Polyvinylalkohol (PVA), Polybutylenadipatterephthalat (PBAT), Polybutylensuccinat (PBS), Polycaprolactone (PCL) und Polyglycolid (PGA). Erdölbasierte Polymere werden vorliegend nicht verwendet und sind kein Bestandteil des Granulats oder des daraus gewonnenen Ersatzes für Knochen, Gräten und Schalen. Biobasierte Kunststoffe, die durch umfassende chemische Veränderung der biogenen Rohstoffe hergestellt wurden (z. B. Polylactide (PLA) aus mit Hilfe der weißen Biotechnologie erzeugter Milchsäure), werden nicht vom Granulat oder dem daraus hergestellten Ersatz für Knochen, Gräten und Schalen umfasst. Ferner zählen neben Polylactid (PLA), auch Polyhydroxyalkanoate (PHA), Polyhydroxybutyrat (PHB), Epoxyacylate und Stoffe auf Ligninbasis wie Thermoplaste zu den biobasierten Kunststoffen. Der Ersatz für Knochen, Gräten und Schalen von Meerestieren umfasst daher kein Bioplastik, keine chemisch veränderten (Bio-)Polymere umfassend biobasierte Polymere umfassend Polylactid (PLA), Polyhydoxyalkanoate (PHA), Polyhydroxybutyrat (PHB), und keine erdölbasierten Biopolymere.

Der Ersatz für Knochen, Gräten und Schalenhergestellt aus dem vorliegenden Granulat weisen eine sehr hohe Materialdichte auf. Der Ersatz für Knochen, Gräten und Schalen kann dabei eine Materialdichte von 1000-2500 kg/m³ erreichen, bevorzugt eine Dichte von 1000-2000 kg/m³, und kann somit mit der Dichte von Hartplastik wie High Density Polyethylene (HDPE) verglichen werden. Es ist darauf hinzuweisen, dass die Granulierung, also die Herstellung des Granulats der Rohstoffe der Mischung als eine "Vorverdichtung" des Materials angesehen werden kann. Durch die Verwendung des vorverdichteten Granulats lässt sich das Material im weiteren Verarbeitungsprozess noch weiter verdichten und homogenisieren. Ferner geschieht die Verdichtung und Homogenisierung unter Verwendung des Granulates leichter und schneller als unter Verwendung der Rohstoffe selbst. Durch Gebrauch des Granulats stellt sich der Herstellungsprozess eines biologisch abbaubaren und kompostierbaren Ersatzes für Knochen, Gräten und Schalen demnach energiesparender und zeiteffizienter dar. Durch die schon im Granulat existierende hohe Dichte des Materials kann daher im weiteren Verarbeitungsverfahren eine noch höhere Dichte im Endprodukt entstehen, als sie in einem Endprodukt direkt hergestellt aus den Rohstoffen entstehen würde.

Diese hohe Materialdichte ist durch Verwendung des bereitgestellten Granulates garantiert. Die hohe Materialdichte führt zu einer bisher nicht erreichten Stabilität der aus dem Granulat hergestellten Produkte.

Zusätzlich weist das vorverdichtete Granulat aber besonders das Endprodukt hergestellt aus dem Granulat aufgrund der Dichte eine sehr hohe Resistenz gegen Flüssigkeiten wie Wasser, Öle und Fette auf was für den Gebrauch als Knochenersatz in pflanzlichen Fleischprodukten von großem Vorteil ist, da solche Produkte einen hohen Wasseranteil aufweisen. Hohe Resistenz gegen Wasser bedeutet hierbei, dass sich der Ersatz für Knochen, Gräten oder Schalen von Meeresfrüchten nicht auflöst, wenn Fleisch- oder Fischersatz darum gewickelt sind.

Ferner ist die Oberflächenstruktur der aus Granulat hergestellten Produkte durch die hohe Dichte im Material sehr glatt. Dies hat haptische und optische Vorteile. Das aus dem Granulat hergestellte Produkt fühlt sich durch die glatte Struktur sehr hochwertig an. Eine glatte Oberfläche weist aber auch eine höhere Spannung auf als eine raue Oberfläche und bewirkt somit ebenfalls eine höhere Resistenz gegen Flüssigkeiten wie Wasser.

Granulat kann unkompliziert und portioniert als Streu- oder Schüttgut in Säcken oder Boxen transportiert werden ohne dass es dabei pulverisiert. Das Granulat kann daher einfach und platzsparend an jeglichen Ort auf der Welt transportiert werden. Die durch die Materialdichte des Materials gewonnene Stabilität der Endprodukte minimiert aber auch den Verschleiß beim Transport der fertigen Produkte. Somit wird ein Bruch beim Transport minimiert und ist unter normalen Umständen auszuschließen. Es entsteht kein Verlust.

Unter Anwendung des hierin beschriebenen Herstellungsverfahrens von Ersatz für Knochen, Gräten und Schalenunter Verwendung des hierin beschriebenen Granulats, können schnelle und daher optimale Prozess-Zykluszeiten von 6-14 Sekunden ab Einfüllung des Granulats bis Herausnehmen des Produkts aus der Form (Spritzguss) erzielt werden. Das bereitgestellte Granulat lässt sich problemlos in Kombination mit einem Vakuum-Befüller verwenden. Eine automatische Befüllung der Spritzgießmaschine ermöglicht dann eine Maschinenlaufzeit von 24h/Tag.

Das Granulat und die daraus hergestellten Produkte sind nicht für den Verzehr gedacht. Durch die Dichte des Materials sind die Produkte normalerweise sehr hart und es ist daher schwierig davon abzubeißen. Falls dennoch Teile ungewollt verzehrt werden und in den Verdauungstrakt eines Menschen oder Tieres gelangen, besteht jedoch durch die rein pflanzlichen und/oder natürlichen Rohstoffe kein gesundheitliches Risiko. Das Material wird vollständig abgebaut. Ein Verzehr des hierin offenbarten Granulats oder der daraus hergestellten Produkte ist auch in großen Mengen nicht gesundheitsgefährdend und wird vom Organismus rückstandslos ausgeschieden.

### V. Detaillierte Beschreibung der Erfindung

### Definitionen

**"Pflanzliche Stärke"** bezieht sich auf jegliche aus Pflanzenmaterial gewonnene Stärke. Die Stärke kann dabei etwa aus Wurzeln, Rüben, Knollen, Rhizomen, Sprossachsen, Blättern, Früchten oder Samen gewonnen werden. Beispielhaftes pflanzliche Stärken sind Weizenstärke, Kartoffelstärke, Maisstärke, Reisstärke oder Tapiokastärke; Stärke aus Maniok (*Manihot esculenta*), Knollenbohne (*Pachyrhizus tuberosus*), Batate (*Ipomoea batatas*), Yamswurzel (*Dioscorea spec*.)*,* Knollen-Platterbse (*Lathyrus tuberosus*), Arakacha (*Arracacia xanthorrhiza*), Knolligem Sauerklee (*Oxalis tuberosa*), Knolliger Kapuzinerkresse (*Tropaeolum tuberosum),* Ulluco (*Ullucus tuberosus),* Ostindischer Pfeilwurz (*Tacco leontopetaloides*), Pfeilwurz (*Maranta spec*.), Achira (*Canna indica*), Taro (*Colocasia esculenta*), Tannia (*Xanthosoma sagittifolium*), Weißer Seerose (*Nymphaea alba*), Gelber Teichrose (*Nuphar lutea*) oder Chayote (*Sechium edule*)*.*

**"Pflanzliche Fasern"** bedeutet aus Pflanzen gewonnene Fasern wie Strohfasern oder Grasfasern. Die pflanzlichen Fasern können mit einer Faserlänge von 0,5-3.8mm im Granulat vorliegen. Bevorzugt haben die Fasern eine Länge von 0,7-1,1mm.

**"Zellstoff"** bezeichnet die beim chemischen Aufschluss von Pflanzen, v.a. Holz, entstehende faserige Masse. Sie besteht zu einem Großteil aus Cellulose. Bevorzugt wird Zellstoff mit kurzen Fasern verwendet. Zellstoff kann mit einer Faserlänge von 0,5-3.8mm im Granulat vorliegen. Bevorzugt haben die Fasern eine Länge von 0,7-1,1mm. Der Zellstoff kann von vielerlei Arten von Pflanzen stammen, etwa von Nadelbäumen, Laubbäumen oder Bambus. In besonders bevorzugten Ausführungsformen ist der Zellstoff zumindest teilweise aus Baobab-Pflanzenmaterial hergestellt. In einer anderen besonders bevorzugten Ausführungsform ist der Zellstoff zumindest teilweise aus Bambus-Pflanzenmaterial hergestellt.

**"Holzstoff"** bezeichnet die bei mechanischem Aufschluss von Pflanzen, v.a. Holz, entstehende faserige Masse. Holzstoff enthält, anders als Zellstoff, für höherwertige Papiere große Anteile an Lignin. Bevorzugt wird Holzstoff mit kurzen Fasern verwendet. Holzstoff kann mit einer Faserlänge von 0,5-3.8mm im Granulat vorliegen. Bevorzugt haben die Fasern eine Länge von 0,7-1,1mm. In manchen Ausführungsformen der vorliegenden Erfindung kommt eine Kombination aus Holzstoff und Zellstoff zum Einsatz.

**"Naturfasern"** ist ein genereller Ausdruck und umfasst pflanzliche Fasern, Zellstoff und Holzstoff.

**"Pflanzliche Dickungsmittel"** und **"pflanzliche Geliermittel"** sind Dickungs- und Geliermittel aus pflanzlichen Ressourcen. Sie bewirken die Gelierung von Flüssigkeit. Beispielhafte pflanzliche Dickungs- oder Geliermittel sind Agar-Agar, Pektin, Carrageen, Alginate, Johannisbrotkernmehl, Guarkernmehl, Sago, pflanzliches Xanthan, Gummi Arabicum, Reismehl, Hartweizenmehl oder Hartweizengrieß.

**"Guarkernmehl"** (auch als Lebensmittelzusatzstoff E 412) ist ein pflanzliches Dickungs- oder Geliermittel. Es wird aus gemahlenen Samen der Guarpflanze gewonnen. Besonders hervorzuheben ist, dass Guarkernmehl die Wirkung anderer pflanzlicher Verdickungs- oder Geliermittel erheblich verstärkt und daher gerne mit anderen pflanzlichen Verdickungs- oder Geliermitteln eingesetzt wird.

**"Xanthan"** (auch als Lebensmittelzusatzstoff E 415), oder "Xanthan Gum", ist ein Dickungs- und Geliermittel. Für die vorliegende Erfindung wird nur pflanzliches Xanthan verwendet. Es wird durch Prozessierung von Bakterien der Gattung *Xanthomonas* aus zuckerhaltigen pflanzlichen Substraten (Polysaccharide) hergestellt. Bevorzugt wird das Xanthan der vorliegenden Erfindung von Bakterien der Spezies *Xanthomonas campestris* hergestellt. Alternativ zu Xanthan kann in der vorliegenden Erfindung Teufelszunge verwendet werden.

**"Teufelszunge"** (*Amorphophallus Konjac)* (auch als Lebensmittelzusatzstoff E 425) ist eine Pflanzenart aus der Gattung der Titanwurzel. Die Knolle dieser Pflanze wird Konjakwurzel genannt. Das Mehl der Knolle zeigt hervorragende filmbildende Eigenschaften und wird hydratisierend, es ist grau gefleckt und geschmacksneutral. Im Gegensatz zu herkömmlicher Gelatine löst sich Konjak nicht schnell auf. Die Zugabe von Teufelszunge oder Xanthan sind vorteilhaft für die Viskosität der Masse und verleihen dieser eine hervorragende Fließeigenschaft bei der Herstellung des Granulats aber auch der Weiterverarbeitung des Granulats zu Produkten.

**"Agar-Agar"** bezeichnet ein aus Algen gewonnenes Galaktose-Polymer. Agar-Agar wird aus den Zellwänden von Algen, insbesondere von Rotalgen gewonnen.

**"Pektin"** (auch als Lebensmittelzusatzstoff E 440a oder E 440b) bezeichnet pflanzliche Polysaccharide, die im Wesentlichen α-1-4-glycosidisch verknüpfte Galacturonsäuren umfassen. Sie können zum Beispiel aus Schalen von Äpfeln, Zitronen und anderen Früchten gewonnen werden. Pektin ist ein pflanzliches Dickungs- oder Geliermittel und sorgt so dafür, dass Flüssigkeiten gelieren.

**"Carrageen"** (auch als Lebensmittelzusatzstoff E 407) ist ein pflanzliches Dickungs- oder Geliermittel, das aus verschiedenen Rotalgenarten gewonnen wird.

**"Alginat"** ist ein pflanzliches Dickungs- oder Geliermittel und besteht aus Salzen der Alginsäure. Es kann aus getrockneten und gemahlenen Braunalgen extrahiert werden. Je nach Salz ist es unter den E-Nummern E 401, E 402, E 403, E 404 und E 405 bekannt.

**"Johannisbrotkernmehl"** (auch als Lebensmittelzusatzstoff E 410) ist ein pflanzliches Dickungs- oder Geliermittel, das aus Johannisbrotbaumsamen durch Mahlen gewonnen wird. Das erhaltene Mehl ist weiß und geschmacksneutral.

**"Sago"** ist ein pflanzliches Dickungs- oder Geliermittel. Sago wird aus dem stärkereichen Mark verschiedener Pflanzenarten wie der Sagopalme, Maniok, oder Kartoffeln gewonnen. Häufig wird es als Granulat in Form kleiner Kügelchen angeboten. Sago quillt in heißer Flüssigkeit etwa um das Dreifache auf und wirkt beim Abkühlen stark bindend. Damit die Flüssigkeit nicht breiig wird, wird Sago nur so lange gekocht oder eingeweicht, bis die Kügelchen weich sind, aber noch ihre Form behalten.

**"Gummi arabicum"** (auch als Lebensmittelzusatzstoff E 414) ist ein pflanzliches Dickungs- und Geliermittel, das aus dem harzigen Pflanzensaft von in Afrika beheimateten Akazienarten, wie beispielsweise *Acacia senegal,* gewonnen wird. Gummi arabicum kann sowohl in Pulver- als auch in Gummiform vorliegen.

**"pflanzliches Mehl"** bezeichnet ein durch Mahlen von Getreidekörnern entstandenes Pulver. Mehl ist ein puderförmiges Nahrungsmittel. Mehl kann etwa aus Mahlen von Körnern von Weizen, Gerste, Roggen, Mais, Dinkel, und sonstigen Getreidearten bestehen. In der vorliegenden Erfindung kann pflanzliche Stärke teilweise oder gänzlich durch pflanzliches Mehl ersetzt werden. Pflanzliche Stärke kann zu 5%, 10%, 15%, 20%, 25%, 30%, 35%, 40% 45%, 50%, 55%, 60%, 65%, 70%, 75%, 80%, 85%, 90%, 95%, 100% durch pflanzliches Mehl ersetzt werden. Bei Stärke/Mehl Mischungen ist der Anteil von Mehl in der Mischung bevorzugt 15%-50%, noch bevorzugter 25%. Am bevorzugtesten ist der gänzliche Austausch von Stärke mit Mehl. Bevorzugt wird hierbei Weizenmehl, oder Weizengries, Kartoffelmehl oder Maismehl.

**"Reismehl"** ist ein pflanzliches Dickungs- und Geliermittel, das durch Entspelzen von Reiskörnern und anschließendes feines Mahlen entsteht. Je nach Verwendung von poliertem oder unpoliertem (braunen) Reiskörnern, erhält man weißes oder braunes Reismehl.

**"Hartweizenmehl"** ist ein pflanzliches Dickungs- und Geliermittel, das aus dem Hartweizen (*Triticum durum*) gewonnen wird, der auch unter Durum, Durumweizen oder Glasweizen bekannt ist. Die Hartweizenkörner werden geschält und anschließend mehrmals gemahlen, sodass Hartweizenmehl entsteht.

**"Hartweizengrieß"** ist ein pflanzliches Verdickungsmittel, das aus dem Hartweizen (*Triticum durum*) gewonnen wird, der auch unter Durum, Durumweizen oder Glasweizen bekannt ist. Wie bei der Hartweizenmehl-Herstellung werden die Hartweizenkörner geschält und anschließend gemahlen. Allerdings werden die Hartweißenkörner weniger häufig gemahlen als bei der Herstellung von Hartweizenmehl, so dass Hartweißengrieß eine gröbere Partikelstruktur aufweist.

**"Wachs"** bezeichnet jegliches in der Natur vorkommendes Wachs, wie etwa Carnaubawachs, Bienenwachs oder Sojawachs. Bevorzugt in der vorliegenden Erfindung ist Rapswachs, Sojawachs oder Carnaubawachs. **"Carnaubawachs"** wird aus dem Blatt der Carnaubapalme (*Copernicia prunifera*) gewonnen. Die Blätter werden geerntet, durch Trocknen und mechanisches Einwirkung wird das Wachs abgetrennt. Das Wachs kommt in diversen Industrien zum Einsatz, wie in der Lebensmittel-, Kosmetik- und Pharma-Industrie. Unbehandeltes Carnaubawachs hat eine helle gelbliche, grünliche bis dunkelgraue Farbe, es ist von Luftbläschen durchsetzt, hart, spröde und wasserunlöslich. Carnaubawachs ist das härteste natürliche Wachs mit dem höchsten Schmelzpunkt von über 80 °C. Außerdem ist es verzehrbar, liegt also natürlich in Lebensmittelqualität vor und hat einen milden Geschmack. Dies ist von Vorteil, da das Granulat und die daraus gewonnenen Produkte keinen Eigengeruch aufweisen. Außerdem gestaltet die Zugabe von Carnaubawachs zu den Stoffen im Granulat umfassend pflanzliche Stärke und Dickungs- und/oder Geliermittel den Verarbeitungsprozess der Stoffe leichtgängiger, trägt aber auch zu Festigkeit, Härte und Resistenz des Granulats und daraus entstehenden Produktes bei. In der vorliegenden Erfindung kommt Carnaubawachs bevorzugt in Pulverform zur Anwendung. In einer Ausführungsform ist Carnaubawachs als optionaler Zusatz im Ersatz von Knochen, Gräten und Schalen enthalten. **"Sojawachs"** wird aus reifen Sojabohnen (*Glycine max*) gewonnen. Die Sojabohnen werden geerntet und zunächst wird Sojaöl gewonnen. Dieses wird hydriert, unter Druck von ca. 200 bar und Temperaturen von etwa 140°C - 225 °C in der Anwesenheit eines metallischen Katalysators erhält man Sojawachs. Das Wachs kommt in diversen Industrien zum Einsatz, wie in der Kosmetik- und Kerzen-Industrie. Unbehandeltes Sojawachs hat eine sehr helle, cremeweiße, manchmal gelbliche Farbe, ist hart, spröde und wasserunlöslich. Sojawachs hat einen Schmelzpunkt von etwa 50 °C. Außerdem ist es verzehrbar und hat einen milden Geschmack. Dies ist bei Granulat und den daraus erhaltenen Produkten von Vorteil, da diese so keinen Eigengeruch aufweisen. Außerdem gestaltet die Zugabe von Sojawachs zu den Stoffen im Granulat umfassend pflanzliche Stärke und Dickungs- und/oder Geliermittel den Verarbeitungsprozess der Stoffe leichtgängiger, trägt aber auch zu Festigkeit, Härte und Resistenz des Granulats und daraus entstehenden Produktes bei. In der vorliegenden Erfindung kommt Sojawachs bevorzugt in Pulverform zur Anwendung. Dem vorstehenden Wachs können optional Biopolymere wie Naturkautschuk beigefügt werden. **"Rapswachs"** wird aus den Samen vom Raps (*Brassica napus*) oder auch von dem nahen Verwandten Ölrübsen (*Brassica rapa subsp. oleifera*) gewonnen. Die Samen werden geerntet und zunächst wird Rapsöl gewonnen. Durch die Härtung von Rapsöl wird Rapswachs gewonnen. Der Schmelzpunkt von Rapswachs liegt bei etwa zwischen 57°C und 61°C. Auch Rapswachs ist verzehrbar und hat die für Caunaubawchs und Sojawachs beschriebenen vorteilhaften Eigenschaften.

**"Biopolymer"** ist ein Polymer, das auf pflanzlichen Rohstoffen basiert und biologisch abbaubar ist. Ein beispielhaftes Biopolymer ist Naturkautschuk, auch Gummi elasticum oder Resina elastica genannt. Naturkautschuk bietet eine höhere Resistenz gegen Wasser als Wachse. Daher ist Naturkautschuk selbst oder Mischungen davon besonders vorteilhaft bei der Herstellung eines Endprodukts aus Granulat. Naturkautschuk kann entweder im Granulat selbst enthalten sein, aber auch als Bestandteil einer Beschichtung eines aus Granulat hergestellten Gebrauchsgegenstands dienen. Naturkautschuk wird in Form von Naturlatex / Naturlatexmilch verwendet, alternativ in Form einer Emulsion basierend auf Naturkautschuk und Wasser mit einem Feststoffgehalt von 40-65%, bevorzugt 50-60%, am bevorzugtesten 60% Kautschuk. Ferner umfassen die Biopolymere auf pflanzlicher Basis Zelluloid, Zellophan, Vulkanfiber auf Zellulosebasis, Zellulosenitrat, Zellulosepropionat und Zelluloseacetatbutyrat, Stärkeblends und nachwachsende Rohstoffe wie Lignin, Chitin, Casein, pflanzliche Gelatine. Ferner zählen Pflanzenöle wie Rizinusöl zu den Biopolymeren. Es ist darauf hinzuweisen, dass in der vorliegenden Beschreibung "Biopolymer" nicht mit "Biokunststoff", "Bioplastik" und ähnlichen chemisch verarbeiteten Polymeren gleichgesetzt wird.

**"Emulsion"** bezeichnet jegliches verteilte Gemisch mehrerer Bestandteile, wie beispielsweise einem oder mehrere Feststoffe und einem Lösungsmittel wie Wasser. Eine Emulsion kann eine Wachsemulsion oder Kautschukemulsion sein. Eine erfindungsgemäße Emulsion umfasst Carnaubawachs, Kautschuk und Wasser. Auch Naturlatex ist eine Emulsion aus Kautschuk und Wasser.

**"Öl"** bezeichnet jegliches pflanzliche Öl. Besonders bevorzugt sind Rapsöl, Nussöl und Sonnenblumenöl.

**"Kompostierbar"** bezeichnet die Eigenschaft eines Materials, nach 6 Monaten unter definierten aeroben Bedingungen zu 90% abgebaut zu werden. Die Kompostierbarkeit eines Materials kann nach DIN EN 13432, Version 2000-12, bestimmt werden. Kompostierbarkeit betrifft hierin sowohl die industrielle Kompostierung als auch die nicht-industrielle Kompostierung durch rein biologische Zersetzung bzw. Verrottung (Heimkompostierung). So ist das erfindungsgemäße Granulat und die daraus gewonnenen Produkte sowohl mittels Intensivrotte als auch mittels Trockenvergärung innerhalb von 4-8 Wochen, bevorzugt innerhalb 4 Wochen kompostierbar, sodass sich das Granulat und die Produkte innerhalb dieser Zeit vollständig aufgelöst haben.

**"Gartenkompostierbar"** bezeichnet die Eigenschaft eines Materials nur durch Einwirkung der Atmosphäre, zum Beispiel auf einem Komposthaufen vollständig abbaubar zu sein.

**"Ultrakompostierbar"** bezeichnet die Eigenschaft eines Materials nur durch Einwirkung der Atmosphäre, zum Beispiel auf einem Komposthaufen innerhalb von 50 Tagen vollständig abbaubar zu sein.

**"Biologisch abbaubar"** bezeichnet die Charakteristik eines Prozesses, einen organischen Stoff biologisch, das heißt durch Lebewesen oder ihre Enzyme, vollständig abzubauen. Dabei findet der Abbau des Stoffes unter aeroben Bedingungen in höchstens 10 Jahren, bevorzugt in 5 Jahren, noch bevorzugter in 1 Jahr statt.

**"Recycelbar"** heißt, dass das Material nach seiner Verwendung durch einen Aufarbeitungsprozess (Recycling) als Material zur Herstellung eines neuen, nicht zur Verbrennung gedachten Produkts verwendet werden kann. Zum Beispiel können hierin beschriebene, aus Granulat hergestellte Produkte nach ihrer Verwendung zerkleinert als Rohmaterial bei der Herstellung von recyceltem Granulat dienen. Ferner können Reste im Herstellungsprozess zerkleinert und recycelt werden (sog. Hackgut oder Hackschnitzel). Dies steht im Gegensatz zu Materialien, die nach ihrer Verwendung entweder durch Verbrennung verwertet oder dauerhaft deponiert werden müssen.

**"Magnesiumstearat"** Magnesiumstearat ist das Magnesiumsalz der Stearinsäure und gehört zu den Kalkseifen. Es wird aus Fetten und Ölen unter Spaltung ihrer Glyceride mittels Magnesium, Seifen und Glycerin gewonnen. Magnesiumstearat wird zum Beispiel in der pharmazeutischen Industrie als Hilfsmittel zur Tabletten- oder Granulatherstellung verwendet. Magnesiumstearat wird auch in einigen Süßigkeiten verwendet. Magnesiumstearat der vorliegenden Erfindung wird aus Fetten h pflanzlicher Herkunft hergestellt. Oft wird Soja-, Raps- oder Maiskeimöl verwendet. Die Substanz ist auch nützlich, weil sie schmierende Eigenschaften aufweist, die verhindern, dass Inhaltsstoffe während der Komprimierung von chemischen Pulvern zu festen Tabletten an den Herstellungsgeräten haften bleiben. Magnesiumstearat ist das am häufigsten verwendete Gleitmittel für Tabletten. Bei der Herstellung gepresster Bonbons wirkt Magnesiumstearat als Trennmittel und wird zum Binden von Zucker in Hartbonbons wie Minzen verwendet. Magnesiumstearat wird allgemein als Schmiermittel in einer Konzentration zwischen 0,25% und 5,0% in der Herstellung von Tabletten, Kapseln und anderen oralen Darreichungsformen verwendet. Aufgrund seiner langjährigen Verwendung als Hilfsstoff in der Pharma-, Lebensmittel- und Kosmetikindustrie ist die Sicherheit von Magnesiumstearat gut dokumentiert.

**"Calciumstearat"** Calciumstearat wird zur Herstellung sogenannter non-tox Stabilisatoren von Kunststoffen, bevorzugt in Verbindung mit Zinkstearat, aber auch Bariumstearat oder Magnesiumstearat verwendet. Weiterhin dient es als Gleitmittel in pharmazeutischen Produkten und als Schmierstoff (Staufferfett) in der Papier- und Metall-verarbeitenden Industrie, als Hydrophobierungsmittel für Baustoffe sowie in der Sandaufbereitung. Technisches Calciumstearat wird durch Reaktion von Calciumchlorid mit dem Natriumsalz der Stearinsäure (meist verunreinigt mit dem Natriumsalz der Palmitinsäure) und anschließendes Auswaschen von Natriumchlorid gewonnen. Es ist ein Imprägniermittel für Textilien. In Kunststoffen kann es als Säurefänger oder Neutralisator in Konzentrationen von bis zu 1000 ppm, als Schmiermittel und als Trennmittel wirken. Es kann in plastischen Farbmittelkonzentraten verwendet werden, um die Pigmentbenetzung zu verbessern. In Hart-PVC kann es die Verschmelzung beschleunigen, den Fluss verbessern und das Anschwellen des Stempels verringern. Zu den Anwendungen in der Körperpflege- und Pharmaindustrie gehören Tablettenformtrennmittel, Antihaftmittel und Geliermittel. Calciumstearat ist Bestandteil einiger Arten von Entschäumern. Außerdem ist Calciumstearat ein Antibackmittel, welches die feie Beweglichkeit von Feststoffen ermöglicht und so das Zusammenbacken pulverförmiger Bestandteile verhindert. Bei der Papierherstellung wird Calciumstearat als Schmiermittel verwendet, um einen guten Glanz zu erzielen, und um Staubbildung und Faltenrisse bei der Papier- und Kartonherstellung zu verhindern. Eine Zugabe von etwa 0,1 bis 10% ist möglich.

**"Zinkstearat"** ist ein weißes Pulver mit einem Schmelzpunkt von 130°C, einem Flammpunkt von 277°C und einer Selbstentzündungstemperatur von 420°C. Die Molekülmasse beträgt 632,3 g/mol. Zinkstearat ist nicht wasserlöslich. Zinkstearat wird als Stabilisator für Emulsionen verwendet. In der Kartenmagie verwendet man Zinkstearat als Kartenpuder, welches die Gleitfähigkeit von Spielkarten verbessert. Zinkstearat wird auch als Schmierstoff bei der Kunststoffverarbeitung verwendet. Es verhindert ein Festsitzen von Polyamidteilen untereinander und ist ein Hilfsmittel bei Plastifizierproblemen. Wenn die Plastifizierschnecke das Material nicht richtig einzieht, kann dies durch Zugabe von ca. 0,2% Zinkstearat verbessert werden, besonders bei Polyamid 6.0. Wenn die Plastifizierschnecke das Material nicht richtig einzieht, kann dies durch Zugabe von ca. 0,2 % Zinkstearat verbessert werden.

**"Glycerin"** Glycerin ist der Trivialname und die gebräuchliche Bezeichnung von Propan-1,2,3-triol und wird bevorzugt als Flüssigkeit (als Lösung, bevorzugt als eine 100%ige Lösung) in der vorliegenden Erfindung verwendet, kann aber auch als Feststoff verwendet werden. Glycerin wird vorliegend als Schmiermittel und Feuchthaltemittel eingesetzt. Bevorzugt ist E 422. E 422 wird überwiegend aus pflanzlichen Fetten und Ölen gewonnen. Die Herstellung aus synthetischen oder tierischen Stoffen ist ebenfalls möglich. Bevorzugt ist "vegetarisches Glycerin" oder "veganes Glycerin", welches durch die Umesterung von pflanzlichen Ölen hergestellt wird. Als Lebensmittelzusatzstoff ist E 422 für alle Nahrungsmittel allgemein zugelassen und es existiert auch keine Höchstmengenbeschränkung für die Verwendung von Glycerin. In der vorliegenden Erfindung erhöht die Zugabe von Glycerin die Beweglichkeit des Materials. Als eine Alternative zu Glycerin kann in der vorliegenden Erfindung auch Sorbit verwendet werden.

**"Sorbit"** ist ein natürlicher Weichmacher und wird als Plastifizierungsmittel eingesetzt. Die industrielle Herstellung erfolgt aus Glucose (Traubenzucker), die aus Mais- und Weizenstärke gewonnen wird; die Glucose wird anschließend durch katalytische Hydrierung zu Glucitol umgesetzt. Wie bei allen Produkten, die über die Stärkeverzuckerung in Europa erzeugt werden, sind bei Sorbit keine gentechnischen Produkte auf dem Markt, wobei zur Herstellung von Sorbit der Einsatz gentechnisch veränderter Organismen möglich wäre. In der vorliegenden Erfindung wird Sorbit als Schmiermittel und Feuchthaltemittel eingesetzt. Bevorzugt ist E 420. Auch bevorzugt ist "vegetarisches Sorbit" oder "veganes Sorbit". Als Lebensmittelzusatzstoff ist E 420 für alle Nahrungsmittel allgemein zugelassen. In der vorliegenden Erfindung erhöht die Zugabe von Sorbit die Beweglichkeit des Materials.

**"Hilfsstoffe"** sind Stoffe, die dem Granulat und daraus hergestellten Produkten weitere vorteilhafte Eigenschaften verleihen, beispielsweise hinsichtlich der Form, Herstellbarkeit, Stabilität. Hilfsstoffe umfassen beispielsweise Antioxidantien, Backpulver, Bindemittel, Emulgatoren, Stabilisatoren, Farbstoffe, Duftstoffe bzw. Geruchsneutralisatoren und/oder Glanzmittel. Diese Hilfsstoffe biologisch abbaubar. Geruchsneutralisatoren umfassen dabei Stoffe aus Vanille, Zitrone Lavendel oder Tanne.

**"Kautschuk"** betrifft Naturkautschuk vorliegend als Emulsion mit Wasser, sowie Naturlatex bzw. Naturlatexmilch, wie etwa Natur Latex Laguna der Firma Colok GmbH. Das Latex oder die Kautschukemulsion kann zusätzlich ein Trennmittel wie Struktol® oder Ammoniak umfassen. Der bevorzugte Feststoffgehalt einer Kautschukemulsion liegt bei 60% Kautschuk. Naturlatex und Kautschukemulsion bezeichnen dieselbe Emulsion und sind austauschbar zu verstehen.

**"anti-stick Zusätze",** auch "Anti-sticking-Agents" oder "anti-tack Zusätze", bzw. "Anti-tack-Agents" verhindern das Aneinanderkleben hierin beschriebener Granulatkörner, können aber auch erst bei Verarbeitung des Granulats zu Ersatz für Knochen, Gräten und Schalen optional dazugegeben werden. Die Termini sind dem Fachmann bekannt. Die genauen Zusammensetzungen solcher anti-stick bzw. anti-tack Zusätze sind Herstellerspezifisch. Anti-tack Zusätze kommen bevorzugt bei der Verwendung von Kautschukemulsion bzw. Latex zum Einsatz. Anti-stick Zusätze bzw. anti-tack Zusätze umfassen Öle, Glycerin, Sorbit, Lecithin, pflanzliche Fette und pflanzliche Stearate.

**"Restfeuchte"** beschreibt den Feuchtigkeitsanteil im fertigen Granulat oder daraus hergestellten Produkt. Eine Restfeuchte von beispielsweise 20% heißt, dass der Feuchtigkeitsanteil im fertigen Granulat noch 20% beträgt. Gemessen wird die Restfeuchte mittels eines elektronischen Feuchteindikators wie etwa mit einem Holzfeuchtemessgerät.

**"Schalen von Meeresfrüchten"** beschreibt die Körper von Meeresfrüchten, Schalen- und Krustentieren. Umfasst sind beispielsweise Garnele, Languste, Hummer, Muscheln, Krebse.

**"rein natürliche, vegane Bestandteile"** bedeutet, dass Ersatz für Knochen, Gräten und Schalen von Meeresfrüchten keine tierischen Bestandteile, keine rein chemischen/synthetischen Bestandteile und kein Plastik enthält. Die fertigen Knochen, Gräten und Schalen können dabei in einer Ausführungsform zu mindestens 90% aus rein pflanzlichen Materialien bestehen und können zudem Mineralstoffe, Ballaststoffe, Farbstoffe und sonstige veganen Zusätze sowie bakterielle Produkte enthalten. Bevorzugt bestehen die fertigen Knochen, Gräten und Schalen zu 95%, 96%, 07%, 08%, 99% oder 100% aus rein pflanzlichen Bestandteilen. Der Ersatz für Knochen, Gräten und Schalen der vorliegenden Erfindung besteht aus rein pflanzlichen Bestandteilen.

**"hochtemperaturbeständig"** bedeutet, dass der Ersatz für Knochen, Gräten und Schalen von Meeresfrüchten Temperaturen von bis zu 100°C stand hält. Der Ersatz kann einer Temperatur von 100% über 5 Minuten lang ausgesetzt sein.

Angaben in % verstehen sich als Massenanteil bzw. Gewichtsprozent (Gew.-%), außer es ist ausdrücklich etwas anderes angegeben. Falls beispielsweise eine Mischung aus welcher Granulat hergestellt wird aus 50% Stärke und 50% Dickungs- und/oder Geliermittel besteht, dann besteht eine Mischung mit einem Gewicht von 1000g aus 500g Stärke und 500g Dickungs- und/oder Geliermittel. Falls zu dieser Mischung (1000g) bezogen auf das Gesamtgewicht der Mischung 70% Wasser hinzugegeben werden, werden 700g Wasser zu 500g Stärke und 500g Dickungs- und/oder Geliermittel hinzugegeben.

Jegliche Zusätze und Bestandteile der vorliegenden Erfindung sind für die Verwendung in Lebensmitteln zugelassen und basieren auf rein pflanzlicher oder natürlicher Basis.

### Biologisch abbaubares und kompostierbares Granulat zur Verwendung in der Herstellung von Ersatz für Knochen, Gräten und Schalen

Hierin offenbart wird ein biologisch abbaubares und kompostierbares Granulat, umfassend pflanzliche Stärke und pflanzliches Dickungs- und Geliermittel mit optionaler Veredelung durch Zusatz weiterer pflanzlicher und/oder natürlicher, veganer Rohstoffe. Das Granulat kann dabei 40-60% Stärke und 40-60% Dickungs- und/oder Geliermittel enthalten, zudem optional 0-20% natürliche Zusätze wie Fasern, Konservierungsstoffe, Öle, Wachse, Stearate, Glycerin, Farbstoffe, Aromen, Geschmäcker, Duftstoffe und weitere der hierin beschriebenen Zusätze. Bevorzugt umfasst das Granulat einen Feststoffanteil (% = Gew.-%) aus 40-50% Stärke, 40-50% Dickungs- und/oder Geliermittel und 0-20% weitere Bestandteile. Mehr bevorzugt umfasst das Granulat einen Feststoffanteil bestehend aus 45-50% Stärke, 45-50% Dickungs- und/oder Geliermittel und 0-10 % weitere Bestandteile. Das Verhältnis von Stärke zu Dickungs- und/oder Geliermittel im Granulat beträgt bevorzugt 1:1. Stärke und Dickungs- und/oder Geliermittel liegen daher bevorzugt zu gleichen Teilen vor. Dieses Verhältnis bleibt bevorzugt auch bei optionaler Veredelung durch Beimischung weiterer pflanzlicher und/oder natürlicher Bestandteile bestehen. Das Granulat hat zudem eine Restfeuchte von 10-30%, bevorzugt von 15-22%, noch bevorzugter von 19-20%. Das Granulat wird zur Herstellung von erfindungsgemäßem Ersatz von Knochen, Gräten und Schalen von Meeresfrüchten verwendet.

Die pflanzliche Stärke enthaltend in erfindungsgemäßem Granulat ist eine native/natürliche, nicht behandelte Stärke umfassend Weizenstärke, Kartoffelstärke, Maisstärke, Reisstärke, Tapiokastärke oder Stärke aus Maniok, Knollenbohne, Batate, Yamswurzel, Knollen-Platterbse, Arakacha, Knolliger Sauerklee, Knollige Kapuzinerkresse, Ulluco, Ostindischer Pfeilwurz, Pfeilwurz, Achira, Taro, Tannia, Weiße Seerose, Gelbe Teichrose oder Chayote oder eine Mischung davon. Bevorzugt ist die pflanzliche Stärke enthaltend in erfindungsgemäßem Granulat Weizenstärke, Kartoffelstärke, Maisstärke, Tapiokastärke oder eine Mischung davon, besonders bevorzugt ist Weizenstärke.

Das pflanzliche Dickungs- und/oder Geliermittel enthaltend in erfindungsgemäßem Granulat umfasst Guarkernmehl, Xanthan (Xanthan Gum), Agar-Agar, Pektin, Carrageen, Alginat, Johannisbrotkernmehl, Sago, Gummi Arabicum, Reismehl, Hartweizenmehl oder Hartweizengrieß oder eine Mischung davon. Bevorzugt ist das Dickungs- und/oder Geliermittel enthaltend in erfindungsgemäßem Granulat eine Mischung aus Guarkernmehl und Xanthan. Der Anteil an Dickungs- und/oder Gelierungsmittel beeinflusst die Erscheinung des Granulats und der daraus erzeugten Produkte. Die Zugabe von Dickungs- und/oder Gelierungsmittel kann den Grad an Transparenz des Produkts beeinflussen. Zudem kann der Anteil an Dickungs- und/oder Gelierungsmittel ebenfalls die Dichte des Materials beeinflussen. Je geringer der Anteil an Dickungs- und/oder Gelierungsmittel in der Mischung, desto höher ist die Quellfähigkeit des erzeugten Materials im Formungsprozess und entsprechend geringer ist die Dichte des Materials. Die Quellfähigkeit hängt aber auch mit der zugeführten Hitze während des Herstellungs- und Formungsprozesses zusammen. Somit kann ein Produkt unterschiedlicher Dichte erzeugt werden. Für ein Produkt mit geringer Dichte dafür aber mehr Lufträume aufweisend, ist bei der Einspritzung in die Herstellungsmaschine (Spritzguss) weniger Material nötig, da dieses sich in der Form ausdehnt. Das Produkt ähnelt in seiner Erscheinungsform Styropor. Im Gegensatz dazu weist ein Produkt mit einem höheren Anteil an Dickungs- und/oder Gelierungsmittel in der Mischung eine höhere Dichte auf. Entsprechend mehr Material wird dann in die Form eingespritzt, um ein Produkt mit plastikähnlichen Eigenschaften zu erzeugen. Das Granulat zur Verwendung in der Herstellung von Ersatz für Knochen, Gräten und Schalen von Meeresfrüchten besteht bevorzugt aus 40-50% Dickungs- und Geliermittel.

Das Granulat weist bevorzugt eine Restfeuchte von 15-22%, noch bevorzugter von 19-20% auf. Eine höhere Restfeuchte im Granulat kann zu einer schmierigen Masse im weiteren Herstellungsprozess von aus dem Granulat hergestellten Produkten führen. Eine zu geringe Restfeuchte bewirkt, dass sich das Granulat-Material im weiteren Herstellungsprozess nicht vernetzt. Dadurch resultiert, dass sich das Material verzieht, sich nicht verdichtet und somit kein stabiles Produkt entsteht. Zudem wird keine glatte Oberfläche des Produktes erzeugt.

Ferner kann das Granulat einen oder mehrere der folgenden Zusätze (Veredelungen) enthalten.

Das Granulat kann zusätzlich pflanzliches Glycerin umfassen. Glycerin wird hierin als Lösung verwendet. Pflanzliches Glycerin weist wasserspeichernde Eigenschaften auf. Es wird als Feuchtigkeitsspender und Weichmacher verwendet. Durch die Zugabe von Glycerin kann die Flexibilität des Granulats und daraus hergestellter Produkte gesteigert werden. Als Alternative zu Glycerin kann Sorbit verwendet werden.

Das Granulat kann zusätzlich Zellstoff und/ oder Holzstoff umfassen. Dies erhöht die mechanische Stabilität und Bruchfestigkeit des Granulats und der daraus erzeugten Produkte und kann so das Abknicken, Splittern oder Zerreißen der Produkte verhindern. Das Granulat der vorliegenden Erfindung enthält bis zu 20% Zellstoff, Holzstoff oder pflanzliche Fasern. Ein höherer Gehalt würde die Weiterverarbeitung zu Produkten verkomplizieren, da die erzeugten Produkte zu spröde würden. Besonders gute mechanische Eigenschaften ergeben sich bei einem Gehalt von 4-10%. Im Vergleich zu Holzstoff hat Zellstoff den Vorteil, dass erzeugte Produkte eine höhere Transparenz aufweisen.

Das Granulat kann zusätzlich pflanzliche Fasern, wie Strohfasern und/oder Grasfasern umfassen. Wie Zellstoff oder Holzstoff erhöht auch die Zugabe pflanzlicher Fasern die mechanische Stabilität der daraus hergestellten Produkte. Im Vergleich zu Zellstoff haben pflanzliche Fasern wie auch bei Holzstoff den Vorteil, dass erzeugte Produkte eine höhere Stabilität aufweisen und für deren Herstellung weniger Chemikalien zum Einsatz kamen. Das Granulat der vorliegenden Erfindung erhält bis zu 20% pflanzliche Fasern. Fasern werden vorliegend in einer Länge von 0,5-3,8mm verwendet. Dabei ist eine Faserlänge von 0.7-1.1mm optimal. Längere Fasern können den Quellprozess des Granulats sowie die Vernetzung der Rohstoffe im Granulat bei der weiteren Verarbeitung des Granulats also beim Herstellen eines gewünschten Produktes verzögern oder ganz verhindern. Kürzere Fasern haben keinen Effekt auf eine erhöhte Stabilität des Endprodukts.

Die Härte und Flexibilität des Granulats bzw. des daraus hergestellten Produkts ist variabel. In manchen Ausführungsformen ist das Granulat bzw. Produkt hart (zum Beispiel Knochen-Ersatz). Hart bedeutet nicht verformbar. In manchen Ausführungsformen ist das Granulat bzw. Produkt leicht flexibel (zum Beispiel Gräten-Ersatz). Durch die Zugabe von Glycerin oder eines oder mehrere von Zellstoff/Holzstoff/pflanzliche Fasern kann das Granulat bzw. Produkt jegliche gewünschte Stabilität/Flexibilität aufweisen. Die Dicke des Formteils hergestellt im Spritzguss hat jedoch auch Einfluss auf die Härte/Elastizität des Produkts.

Ferner kann das Granulat zusätzlich Wachs, bevorzugt Rapswachs, Sojawachs, Candelillawachs, Reiskleiewachs oder Carnaubawachs, am bevorzugtesten Rapswachs als Feststoff umfassen. Die Anwesenheit von Wachs im Granulat führt dazu, dass daraus hergestellte Produkte eine höhere Resistenz gegen Flüssigkeiten wie Wasser, Öle und Fette aufweist. Der Zusatz von Wachs im Granulat kann die Stabilität des Produkts beim Kontakt mit einer Flüssigkeit um mindestens 10%, mindestens 20%, mindestens 25%. mindestens 30% oder sogar mehr als 30% steigern. Das Granulat kann 1-10% Wachs, bevorzugt 5% Wachs, bevorzugt Rapswachs umfassen.

Das Granulat kann zusätzlich ein Biopolymer umfassen. Auch Biopolymere erhöhen die Resistenz der aus dem Granulat erzeugten Produkte gegenüber Wasser, Fett und Öl. Der Zusatz von höchst widerstandsfähigen Biopolymeren im Granulat kann die Stabilität des daraus hergestellten Produkts beim Kontakt mit einer Flüssigkeit um mindestens 10%, mindestens 20%, mindestens 25%, mindestens 100% oder sogar mehr als 100% steigern. Bevorzugtes Biopolymer ist Naturkautschuk. Zudem kann das Granulat daher zusätzlich auch Naturkautschuk/Naturlatex/Naturlatexmilch umfassen. Naturkautschuk kann auch als Hauptbestandteil einer Beschichtung der aus Granulat hergestellten Produkte dienen. Besonders aus Granulat hergestellte Trinkhalme profitieren von einer Beschichtung mit Naturlatex in Hinblick auf Langlebigkeit in Flüssigkeit.

Das Granulat kann zudem Öl, bevorzugt Nuss- oder Rapsöl umfassen. Öl verbessert die Fließeigenschaften der Rohmasse während der Herstellung zu Granulat als auch des Granulats während der Herstellung des Produkts.

Das Granulat kann zudem ein oder mehrere Konservierungsstoffe enthalten. Durch Beimischen von Konservierungsstoffen zum Material des Granulats kann einem Schimmeln des erzeugten Granulats oder Produkts entgegengewirkt werden. Konservierungsstoffe umfassen E 220 Schwefeldioxid/schweflige Säure, E 221 Natriumsulfit, E 222 Natriumhydrogensulfit, E 223 Natriumdisulfit, E 224 Kaliumdisulfit, E 226 Calciumsulfit, E 227 Calciumhydrogensulfit, E 228 Kaliumhydrogensulfit oder eine Mischung davon. Diese Konservierungsstoffe sind als Lebensmittel Zusatzstoffe gelistet, die neben den klassischen Eigenschaften eines Konservierungsstoffs zudem auch dem Abbau von optional im Granulat vorhandenen Farbstoffen, Vitaminen, Duftstoffen und Aromen durch Sauerstoffeinfluss entgegenwirken. Somit bleibt die allgemeine Haltbarkeit des Granulats sowie des daraus hergestellten Produkts länger erhalten.

Ferner kann das Granulat zusätzlich Essig und/oder Lecithin umfassen. Essig und Lecithin werden als Bindemittel der Inhaltsstoffe des Granulats verwendet. Die einzelnen Inhaltsstoffe des Granulats können also durch Zugabe von Essig und Lecithinen besser und homogener miteinander verbunden werden.

Das Granulat kann zusätzlich ein pflanzliches Stearat wie Magnesiumstearat, Calciumstearat, Zinkstearat und/oder Aluminiumtristearat umfassen. Magnesiumstearat, Calciumstearat, Zinkstearat und Aluminiumtristearat werden als Gleit- oder Schmiermittel verwendet. Das Granulat bzw. Produkte aus diesem sind somit weniger adhärent und lassen sich leichter z.B. aus Gussformen lösen. Eines oder mehrere der Stearate können zu 0,1-10% des Materials des Granulats ausmachen. In manchen Ausführungsformen umfasst das Granulat bevorzugt zwischen 0,4 und 8 % Magnesiumstearat, 0,16% Calciumstearat, 0,32% Zinkstearat und/oder 1,6% Aluminiumtristearat.

Optional kann zudem die Farbe des Granulats mittels herkömmlicher Lebensmittelfarbe, modifiziert werden. Die Lebensmittelfarbe ist hierbei aus rein natürlichen, bevorzugt pflanzlichen Materialien gewonnen. Bevorzugt wurde die Farbe rein aus pflanzlichen Materialien gewonnen.

Ferner optional kann der Geruch des Granulats durch Zufügen herkömmlicher Aromen, bevorzugt ätherischer Öle modifiziert werden. Bevorzugt enthält das Granulat zur Verwendung für die Herstellung von Ersatz von Knochen, Gräten und Schalen Aromen die dem Geschmack von Knochenmark ähneln. Um einen solchen Geschmack zu erzielen, können Extrakte von kalziumreichen Gemüsesorten wie Grünkohl, Brokkoli, Spinat, Mangold, Basilikum, Petersilie und Rucola im Granulat vorhanden sein. Auch Tofu, angereicherte Pflanzenmilch, kalziumreiche Mineralwasser, Nüsse wie Pistazien, Haselnüsse, Mandeln und Mandelmus, Sesam und Tahin, Hanf, Leinsamen, Kürbiskerne, Mohn, getrocknete Früchte wie Feigen und Aprikosen, Getreide und Pseudogetreide wie Haferflocken, Hirse, Amarant, Quinoa, Hülsenfrüchte wie Soja, Mungobohne, Kichererbsen und weiße Bohnen und Extrakte daraus können als Bestandteil im Granulat als eisenhaltiger Stoff und/oder Aroma vorhanden sein.

Die Form der Granulat-Stücke ist variabel. Das Granulat kann zum Beispiel dropsförmig, linsenförmig, zylindrisch oder perlenförmig, aber auch flockenförmig (Flakes) sein. Der Durchmesser der Granulat-Stücke ist variabel. Der Durchmesser der Granulat-Stücke kann 1-5 mm sein. In bevorzugten Ausführungsformen ist der Durchmesser des Granulats 3-5 mm. Beispielhafte Durchmesser der einzelnen Granulat-Stücke sind 1 mm, 1,5 mm, 2 mm, 2,5 mm, 3 mm, 3,5 mm, 4 mm, 4,5 mm, 5mm. Durch einen gewissen Durchmesser der Granulat-Stücke soll eine Staubbildung vermieden werden welche aber durch die Dichte des Materials und die Restfeuchte ohnehin sehr gering ausfällt und normalerweise nicht vorkommt.

Das Granulat wird mittels Spritzgießen zu Ersatz von Knochen, Gräten und Schalen von Meeresfrüchten weiterverarbeitet. Das Granulat wird in einem Schneckenkanal befindlich in einem beheizbaren Zylinder durch Scherung der Schnecke und durch Wärmeeinwirkung homogenisiert und durch Staudruck verdichtet und anschließend mit hohem Druck in eine gewünschte Form eingespritzt (Spritzguss).

### Bevorzugte Ausführungsformen des Granulats zur Herstellung von Ersatz für Knochen, Gräten und Schalentieren.

Das Granulat hat neben einer Restfeuchte von 15-22% folgende Zusammensetzung des Feststoffanteils:

| | |
|---|---|
| Pflanzliche Stärke und/oder | |
| Pflanzliches Mehl | 40-50% |
| Dickungs- und/oder | |
| Geliermittel | 40-50% |
| Optionale Zusätze | 0-20% |

Das Granulat hat neben einer Restfeuchte von 15-22% bevorzugt folgende Zusammensetzung des Feststoffanteils:

| | |
|---|---|
| Pflanzliche Stärke und/oder | |
| Pflanzliches Mehl | 45-50% |
| Dickungs- und/oder | |
| Geliermittel | 45-50% |
| Optionale Zusätze | 0-10% |

Das Granulat hat neben einer Restfeuchte von 15-22% besonders bevorzugt folgende Zusammensetzung des Feststoffanteils:
Variante A:

| | |
|---|---|
| Weizen stärke | 50% |
| Guarkernmehl | 45% |
| Xanthan Gum | 5% |

Variante B:

| | |
|---|---|
| Weizen stärke | 45% |
| Guarkernmehl | 40% |
| Xanthan Gum | 5% |
| Rapswachs | 5% |
| Naturkautschuk Pulver | 5% |

Variante C:

| | |
|---|---|
| Weizen stärke | 45% |
| Guarkernmehl | 40% |
| Xanthan Gum | 5% |
| Naturkautschuk Pulver | 10% |

Variante D:

| | |
|---|---|
| Weizen stärke | 45% |
| Tapiokastärke | 40% |
| Reismehl | 5% |
| Zellstoff | 10% |

Variante E:

| | |
|---|---|
| Weizen stärke | 45% |
| Guarkernmehl | 40% |
| Xanthan Gum | 5% |
| Strohfasern | 10% |

Variante F:

| | |
|---|---|
| Weizen stärke | 40% |
| Guarkernmehl | 35% |
| Xanthan Gum | 5% |
| Strohfasern | 10% |
| Rapswachs | 5% |
| Naturkautschuk | 5% |

Variante G:

| | |
|---|---|
| Weizen stärke | 40% |
| Guarkernmehl | 55% |
| Xanthan Gum | 5% |

Variante H:

| | |
|---|---|
| Maisstärke | 20% |
| Agar Agar | 75% |
| Xanthan Gum | 5% |

Variante I:

| | |
|---|---|
| Maisstärke: | 45% |
| Guarkernmehl: | 40% |
| Xanthan Gum: | 5% |
| Holzstoff: | 9% |
| Magnesiumstearat: | 1% |

Variante J:

| | |
|---|---|
| Weizenmehl: | 50% |
| Guarkernmehl: | 45% |
| Xanthan Gum: | 5% |

Variante K:

| | |
|---|---|
| Weizen stärke: | 25% |
| Weizenmehl: | 25% |
| Guarkernmehl: | 45% |
| Xanthan Gum: | 5% |

Variante L

| | |
|---|---|
| Weizen stärke | 50% |
| Guarkernmehl | 45% |
| Xanthan Gum | 5% |

Diese Variante enthält zudem Spuren von Glycerin und Eisenbisglycinat und ist gefärbt.

### Verfahren zur Herstellung des Granulats

Die vorliegende Erfindung umfasst auch Verfahren zur Herstellung des Granulats. Dabei weist das Verfahren die folgenden Schritte auf:
a) Herstellen einer Mischung aus festen und flüssigen Bestandteilen. Die festen Bestandteile umfassen

| | |
|---|---|
| Pflanzliche Stärke und/oder | |
| Pflanzliches Mehl | 40-60% |
| Dickungs- oder | |
| Geliermittel | 40-60% |
| Optionale Zusätze | 0-20% |

Die optionalen Zusätze umfassen pflanzliche Fasern, Zellstoff, Holzstoff, Wachs und/oder Naturkautschuk sowie Aromen, Duftstoffe und sonstige hierin beschriebenen Zusätze, oder eine Mischung davon, Die flüssigen Bestandteile umfassen Wasser, Öl, flüssiges Glycerin und werden in einer Menge von insgesamt 30-60% des Gesamtgewichts der festen Bestandteile dazugegeben.
b) Formen eines Strangs;
c) Aushärten und Entfeuchten des Strangs, wobei eine Restfeuchte von 10-30%, bevorzugt von 15-22% zurück bleibt
d) Schneiden des in c) erzeugten Strangs zu Granulat;

In manchen Ausführungsformen umfasst das Verfahren Schritt d), das Schneiden des Stranges zu Granulat vor Schritt c), das Aushärten und Entfeuchten.

In einer bevorzugten Ausführungsform weist das Verfahren die folgenden Schritte auf:
a) Herstellen einer Mischung aus festen und flüssigen Bestandteilen. Die festen Bestandteile umfassen 40-60% pflanzliche Stärke und/oder pflanzliches Mehl und 40-60% pflanzliches Dickungs- und Gelierungsmittel bevorzugt im Verhältnis 1:1. Optional können ferner 0-20% Zusätze wie pflanzliche Fasern, Zellstoff, Holzstoff, Wachs und/oder Naturkautschuk sowie Aromen und dergleichen oder eine Mischung davon umfasst sein, wobei sich das Verhältnis der Stärke zu Dickungs- und/oder Geliermittel von 1:1 bevorzugt nicht verändert. Die flüssigen Bestandteile umfassen Wasser und werden in einer Menge von insgesamt 30-60% des Gewichts der Gesamtheit der festen Bestandteile dazugegeben.
b) Formen eines Strangs;
c) Aushärten und Entfeuchten des Strangs, wobei das Granulat eine Restfeuchte von 10-30%, bevorzugt von 15-22% zurück bleibt
d) Schneiden des in c) erzeugten Strangs zu Granulat;

### Schritt a

In Schritt a) werden pflanzliche Stärke und/oder pflanzliches Mehl und pflanzliches Dickungs- und/oder Geliermittel mit Flüssigkeit umfassend Wasser zu einer pulverigen Mischung mit hoher Restfeuchte vermischt. Dies geschieht mit einem Mischer, der die Mischung zu einer homogenen Masse verrührt. Die Mischung kann optional auch Glycerin, Sorbit, pflanzliche Fasern, Zellstoff, Holzstoff, Konservierungsstoffe, Aromen, Wachs (bevorzugt Rapswachs, Carnaubawachs oder Sojawachs), Naturkautschuk (bevorzugt als Emulsion oder Pulver), Stearat (bevorzugt Magnesiumstearat), Öl (bevorzugt Nussöl), Essig und Lecithin und/oder sonstige hierin beschriebene Zusätze umfassen.

Hierbei sollten zunächst die festen/trockenen Bestandteile gemischt werden (Stärke, Dickungs- oder Geliermittel, Fasern etc.). Die flüssigen Bestandteile (Wasser, Glycerin, Öl, Lebensmittelfarbe, Aromen, etc.) werden dann bezogen auf das Gewicht der Mischung der festen/trockenen Bestandteile abgemessen und miteinander gemischt, bevor die Mischung der flüssigen Bestandteile zur Mischung der festen Bestandteile gegeben wird und die Mischungen dann vermischt werden. Dies vermeidet ein Verklumpen der Masse und verbessert die homogene Verteilung der einzelnen Bestandteile in der Masse die dann verdichtet und extrudiert wird.

Die Mengenanteile von Stärke zu Dickungs- und Geliermittel können im Bereich von 40-60% Stärke und 40-60% Dickungs- und/oder Geliermittel variieren, liegen jedoch bevorzugt in einem Verhältnis von 1:1 vor und bleiben bevorzugt 1:1, auch bei optionalem Zusatz weiterer Bestandteile wie pflanzliche Fasern, Wachs, Kautschuk, Zellstoff etc.

Bevorzugt wird daher eine Mischung umfassend Stärke und Dickungs- und Geliermittel im Verhältnis 1:1, und optional einen Zusatz von einem oder mehreren weiteren festen Bestandteilen wie pflanzliche Fasern, Wachs, Kautschuk, Zellstoff, Holzstoff oder eine Mischung davon. Ferner umfasst die Mischung bezogen auf das Gewicht der Trockenmasse der festen Bestandteile 30-60% flüssige Bestandteile umfassend Wasser.

In manchen Ausführungsformen umfasst das pflanzliche Dickungs- und/oder Gelierungsmittel in der Mischung aus Schritt a) Guarkernmehl, Xanthan Gum , Agar-Agar, Pektin, Carrageen, Alginat, Johannisbrotkernmehl, Sago, Gummi Arabicum, Reismehl, Hartweizenmehl oder Hartweizengrieß oder eine Mischung davon.

In bevorzugten Ausführungsformen ist das Dickungsmittel in der Mischung aus Schritt a) Guarkernmehl und Xanthan Gum, Teufelszunge, Agar Agar oder Pektin, am meisten bevorzugt ist eine Mischung aus Guarkernmehl und Xanthan Gum.

In einigen Ausführungsformen umfasst die pflanzliche Stärke in der Mischung aus Schritt a) unbehandelte Stärke umfassend Weizenstärke, Kartoffelstärke, Maisstärke, Reisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote, bevorzugt Kartoffelstärke, Maisstärke, Tapiokastärke oder eine Mischung davon.

Die Mischung in a) kann zusätzlich eine oder mehrere der folgenden Zusätze umfassen.

Die Mischung in a) kann zusätzlich pflanzliches Glycerin und/oder Sorbit umfassen. Hierbei wird Glycerin bevorzugt als Lösung verwendet, kann aber auch in trockener Form dem Flüssigkeitsanteil beigemengt werden. Pflanzliches Glycerin weist wasserspeichernde Eigenschaften auf. Es wird als Feuchtigkeitsspender und Weichmacher verwendet. Durch die Zugabe von Glycerin kann die Flexibilität des Granulats und daraus hergestellter Produkte gesteigert werden. Alternativ zu Glycerin kann die Mischung Sorbit umfassen.

Die Mischung in a) kann zusätzlich Zellstoff und/oder Holzstoff umfassen. Bevorzugt ist der Zellstoff und/oder Holzstoff zumindest teilweise aus Baobab- oder Bambuspflanzenmaterial hergestellt. Dies erhöht die mechanische Stabilität und Bruchfestigkeit des Granulats und der daraus erzeugten Produkte und kann so das Abknicken, Splittern oder Zerreißen der Produkte verhindern. Das Granulat der vorliegenden Erfindung enthält bis zu 20% Zellstoff, Holzstoff oder pflanzliche Fasern. Ein höherer Gehalt würde die Weiterverarbeitung zu Produkten verkomplizieren, da die erzeugten Produkte zu spröde würden. Besonders gute mechanische Eigenschaften ergeben sich bei einem Gehalt von 4-10%. Im Vergleich zu Holzstoff hat Zellstoff den Vorteil, dass erzeugte Produkte eine höhere Transparenz aufweisen.

Die Mischung in a) kann zusätzlich pflanzliche Fasern, wie Strohfasern und/oder Grasfasern umfassen. Wie Zellstoff oder Holzstoff erhöht auch die Zugabe pflanzlicher Fasern die mechanische Stabilität der daraus hergestellten Produkte. Im Vergleich zu Zellstoff haben pflanzliche Fasern wie auch bei Holzstoff den Vorteil, dass erzeugte Produkte eine höhere Stabilität aufweisen und für deren Herstellung weniger Chemikalien zum Einsatz kamen. Die Mischung aus a) kann zu 20% pflanzliche Fasern enthalten. Bevorzugt jedoch 1-10%, am bevorzugtesten 10%. Dabei ist eine Faserlänge von 0,7-1,1mm optimal. Längere Fasern können den Quellprozess des Granulats sowie die Vernetzung der Rohstoffe im Granulat bei der weiteren Verarbeitung des Granulats also beim Herstellen eines gewünschten Produktes verzögern oder ganz verhindern. Kürzere Fasern haben keinen Effekt auf eine erhöhte Stabilität des Endprodukts.

Ferner kann die Mischung in a) zusätzlich Wachs, bevorzugt Rapswachs, Sojawachs oder Carnaubawachs, am bevorzugtesten Rapswachs als Feststoff umfassen. Die Anwesenheit von Wachs im Granulat führt dazu, dass daraus hergestellte Produkte eine höhere Resistenz gegen Flüssigkeiten wie Wasser, Öle und Fette aufweist. Der Zusatz von Wachs im Granulat kann die Stabilität des Produkts beim Kontakt mit einer Flüssigkeit um mindestens 10%, mindestens 20%, mindestens 25%. mindestens 30% oder sogar mehr als 30% steigern.

Zudem kann die Mischung in a) zusätzlich auch Biopolymere wie Naturkautschuk/Naturlatex/Naturlatexmilch umfassen. Naturkautschuk erhöht die Resistenz des Granulats und der daraus erzeugten Produkte gegenüber Wasser, Fett und Öl. Der Zusatz des höchst widerstandsfähigen Naturkautschuk im Granulat kann die Stabilität des Produkts beim Kontakt mit einer Flüssigkeit um mindestens 10%, mindestens 20%, mindestens 25%, mindestens 100% oder sogar mehr als 100% steigern. Naturkautschuk kann auch als Hauptbestandteil einer Beschichtung der aus Granulat hergestellten Produkte dienen. Besonders aus Granulat hergestellte Trinkhalme profitieren von einer Beschichtung mit Naturlatex in Hinblick auf Langlebigkeit in Flüssigkeit.

Die Mischung in a) kann zusätzlich ein weiteres, nicht chemisch verarbeitetes Biopolymer umfassen . Auch Biopolymere erhöhen die Resistenz der aus dem Granulat erzeugten Produkte gegenüber Wasser, Fett und Öl. Der Zusatz von höchst widerstandsfähigen Biopolymeren im Granulat kann die Stabilität des daraus hergestellten Produkts beim Kontakt mit einer Flüssigkeit um mindestens 10%, mindestens 20%, mindestens 25%, mindestens 100% oder sogar mehr als 100% steigern.

Die Mischung in a) kann zudem Öl, bevorzugt Nuss- oder Rapsöl umfassen. Öl verbessert die Fließeigenschaften der Rohmasse während der Herstellung zu Granulat als auch des Granulats während der Herstellung des Produkts.

Die Mischung in a) kann zudem ein oder mehrere Konservierungsstoffe enthalten. Durch Beimischen von Konservierungsstoffen zum Material des Granulats kann einem Schimmeln des erzeugten Granulats oder Produkts entgegengewirkt werden. Konservierungsstoffe umfassen E 220 Schwefeldioxid/schweflige Säure, E 221 Natriumsulfit, E 222 Natriumhydrogensulfit, E 223 Natriumdisulfit, E 224 Kaliumdisulfit, E 226 Calciumsulfit, E 227 Calciumhydrogensulfit, E 228 Kaliumhydrogensulfit oder eine Mischung davon. Diese Konservierungsstoffe sind als Lebensmittel Zusatzstoffe gelistet, die neben den klassischen Eigenschaften eines Konservierungsstoffs zudem auch dem Abbau von optional im Granulat vorhandenen Farbstoffen, Vitaminen, Duftstoffen und Aromen durch Sauerstoffeinfluss entgegenwirken. Somit bleibt die allgemeine Haltbarkeit des Granulats sowie des daraus hergestellten Produkts länger erhalten.

Ferner kann die Mischung in a) zusätzlich Essig und/oder Lecithin umfassen. Essig und Lecithin werden als Bindemittel der Inhaltsstoffe des Granulats verwendet. Die einzelnen Inhaltsstoffe des Granulats können also durch Zugabe von Essig und Lecithinen besser und homogener miteinander verbunden werden.

Die Mischung in a) kann zusätzlich ein pflanzliches Stearat wie Magnesiumstearat, Calciumstearat, Zinkstearat und/oder Aluminiumtristearat umfassen. Magnesiumstearat, Calciumstearat, Zinkstearat und Aluminiumtristearat werden als Gleit- oder Schmiermittel verwendet. Das Granulat bzw. Produkte aus diesem sind somit weniger adhärent und lassen sich leichter z.B. aus Gussformen lösen. In manchen Ausführungsformen umfasst die Mischung bevorzugt zwischen 0,25 und 5%, bevorzugt 1% Magnesiumstearat, 0,1-0,2% Calciumstearat, 0,1-0,4% Zinkstearat und/oder 1,6% Aluminiumtristearat.

Optional kann zur Mischung in a) Lebensmittelfarbe, herkömmlicher Aromen bevorzugt ätherischer Öle, Düfte, Geschmäcker und dergleichen zugegeben werden.

Optional kann zur Mischung in a) ein Aroma oder mehrere Aromen zugegeben werden. Aromen die dem Geschmack von Knochenmark ähneln werden bevorzugt und umfassen Extrakte von kalziumreichen Gemüsesorten wie Grünkohl, Brokkoli, Spinat, Mangold, Basilikum, Petersilie und Rucola im Granulat vorhanden sein. Auch Tofu, angereicherte Pflanzenmilch, kalziumreiche Mineralwasser, Nüsse wie Pistazien, Haselnüsse, Mandeln und Mandelmus, Sesam und Tahin, Hanf, Leinsamen, Kürbiskerne, Mohn, getrocknete Früchte wie Feigen und Aprikosen, Getreide und Pseudogetreide wie Haferflocken, Hirse, Amarant, Quinoa, Hülsenfrüchte wie Soja, Mungobohne, Kichererbsen und weiße Bohnen und Extrakte daraus können als Bestandteil im Granulat als eisenhaltiger Stoff und/oder Aroma vorhanden sein. Auch können Silikate wie Ton, Lehm, Glimmer, Kaolin, Neuburger Kieselerde, Karbonate/Sulfate wie Kreide, Doloit, Baryt und/oder Oxide/Hydroxide wie Quarzmehle, kristalline Kieselsäure, Aluminium-/Magnesiumhydroxide sowie Magnesium-, Zink- oder Kalziumoxide im Granulat und außerdem mineralische Füllstoffe wie Calciumcarbonat, Eisenchelat/Eisenbisglyycinat und Talkum enthalten sein.

### Bevorzugte Ausführungsformen

Die Zusammensetzung der Mischung zur Herstellung von Granulat umfasst

| | |
|---|---|
| Pflanzliche Stärke und/oder | |
| Pflanzliches Mehl | 40-60% |
| Dickungs- oder | |
| Geliermittel | 40-60% |
| Optionale Zusätze | 0-20% |

Bezogen auf das Gewicht der Masse zusätzlich:

| | |
|---|---|
| Flüssige Bestandteile | |
| umfassend Wasser | 30-60% |

Die Zusammensetzung der Mischung zur Herstellung von Granulat umfasst bevorzugter

| Pflanzliche Stärke und/oder | |
|---|---|
| Pflanzliches Mehl | 40-50% |

| Dickungs- oder | |
|---|---|
| Geliermittel | 40-50% |
| Optionale Zusätze | 0-20% |

Bezogen auf das Gewicht der Masse zusätzlich:

| Flüssige Bestandteile | |
|---|---|
| umfassend Wasser | 30-60% |

Eine noch bevorzugtere Zusammensetzung einer Mischung zur Herstellung von Granulat umfasst

| Pflanzliche Stärke und/oder | |
|---|---|
| Pflanzliches Mehl | 45-50% |

| Dickungs- oder | |
|---|---|
| Geliermittel | 45-50% |
| Optionale Zusätze | 0-10% |

Bezogen auf das Gewicht der Masse zusätzlich:

| Flüssige Bestandteile | |
|---|---|
| umfassend Wasser | 35-60% |

Besonders bevorzugte Zusammensetzungen der Mischung zur Herstellung von Granulat umfassen
Variante A:

| | |
|---|---|
| Weizen stärke | 50% |
| Guarkernmehl | 45% |
| Xanthan Gum | 5% |

Bezogen auf das Gewicht der Masse zusätzlich:

| | |
|---|---|
| Wasser | 40% |
| Pflanzliches Glycerin | 5% |
| Rapsöl | 4% |

Variante B:

| | |
|---|---|
| Weizen stärke | 45% |
| Guarkernmehl | 40% |
| Xanthan Gum | 5% |
| Rapswachs | 5% |
| Naturkautschuk Pulver | 5% |

Bezogen auf das Gewicht der Masse zusätzlich:

| | |
|---|---|
| Wasser | 30% |
| Pflanzliches Glycerin | 5% |
| Rapsöl | 4% |

Variante C:

| | |
|---|---|
| Weizen stärke | 45% |
| Guarkernmehl | 40% |
| Xanthan Gum | 5% |
| Naturkautschuk Pulver | 10% |
| Bezogen auf das Gewicht der Masse zusätzlich: | |
| Wasser | 45% |
| Pflanzliches Glycerin | 5% |
| Rapsöl | 4% |

Variante D:

| | |
|---|---|
| Weizen stärke | 45% |
| Tapiokastärke | 40% |
| Reismehl | 5% |
| Zellstoff | 10% |
| Bezogen auf das Gewicht der Masse zusätzlich: | |
| Wasser | 40% |
| Pflanzliches Glycerin | 5% |
| Rapsöl | 4% |

Variante E:

| | |
|---|---|
| Weizen stärke | 45% |
| Guarkernmehl | 40% |
| Xanthan Gum | 5% |
| Strohfasern | 10% |
| Bezogen auf das Gewicht der Masse zusätzlich: | |
| Wasser | 40% |
| Rapswachs | 5% |
| Naturkautschuk | 5% |
| Pflanzliches Glycerin | 5% |
| Rapsöl | 4% |
| E 221 Natriumsulfit | 1% |

Variante F

| | |
|---|---|
| Weizen stärke | 40% |
| Guarkernmehl | 35% |
| Xanthan Gum | 5% |
| Strohfasern | 10% |
| Rapswachs | 5% |
| Naturkautschuk Pulver | 5% |
| Bezogen auf das Gewicht dieser Masse Zugabe von | |
| Wasser | 40% |
| Pflanzliches Glycerin | 5% |
| Rapsöl | 4% |

Variante G:

| | |
|---|---|
| Weizen stärke | 40% |
| Guarkernmehl | 55% |
| Xanthan Gum | 5% |
| Bezogen auf das Gewicht dieser Masse Zugabe von | |
| Wasser | 40% |
| Pflanzliches Glycerin | 5% |
| Rapsöl | 4% |

Variante H:

| | |
|---|---|
| Maisstärke | 20% |
| Agar-Agar | 75% |
| Xanthan Gum | 5% |
| Bezogen auf das Gewicht dieser Masse Zugabe von | |
| Wasser | 40% |
| Pflanzliches Glycerin | 5% |
| Rapsöl | 4% |

Variante I:

| | |
|---|---|
| Maisstärke: | 45% |
| Guarkernmehl: | 40% |
| Xanthan Gum: | 5% |
| Holzstoff: | 9% |
| Magnesiumstearat: | 1% |
| Bezogen auf die Trockenmasse: | |
| Wasser: | 60% |

Variante J:

| | |
|---|---|
| Weizenmehl | 50% |
| Guarkernmehl | 45% |
| Xanthan Gum | 5% |
| Bezogen auf die Trockenmasse: | |
| Wasser: | 60% |

Variante K:

| | |
|---|---|
| Weizenmehl | 25% |
| Weizen stärke | 25% |
| Guarkernmehl | 45% |
| Xanthan Gum | 5% |
| Bezogen auf die Trockenmasse: | |
| Wasser: | 60% |

Variante L

| | |
|---|---|
| Weizen stärke | 50% |
| Guarkernmehl | 45% |
| Xanthan Gum | 5% |

Diese Variante enthält zudem Spuren von Glycerin und Eisenbisglycinat und ist gefärbt.

### Schritt b

In Schritt b) wird die Mischung aus Schritt a) durch Extrusion zu einem oder mehreren Granulat-Strängen geformt. Es kann ein "Single-" oder "Twin-Extruder" verwendet werden. Die pulverige bis zähflüssige Masse aus a) wird dabei direkt in einen Einfülltrichter eines Extruders gegeben über welchen die Masse über einen Einzug in den Zylinder des Extruders überführt wird. Der Einzug sollte eine Temperatur von 45°C aufweisen. Eine Verarbeitung des Materials kann im Zylinder bei einer Temperatur zwischen 50°C und 110°C erfolgen. Die Temperatur des Zylinders sollte bevorzugt durchschnittlich 70°C aufweisen. Unterschiedliche Temperaturbereiche können mit Hilfe von Heizbändern, die um den Zylinder herum angebracht sind, eingestellt werden, wobei sich die Temperaturgrenzen im Zylinder überlappen. Bevorzugt sind um den Zylinder bei der Extrusion fünf Heizbänder angebracht, welche optimal von Richtung Einzug zum Auslass aufeinanderfolgend auf 80°C, 105°C, 100°C, 50°C eingestellt sind. Die Masse wird bevorzugt mit einer im Zylinder befindlichen Schnecke verdichtet (Schneckenextruder). Jegliche Art von Schnecke (Single-, Double-, Spezial-Extruder oder Kokneter) können eingesetzt werden. Die Temperatur im Schneckenkanal hängt auch von der Schneckengeometrie ab. Unter Energiezufuhr wird die Masse plastifiziert. Es entsteht eine homogene in sich vernetzte und verdichtete Masse. Die verdichtete Masse wird durch das Rotieren der Schnecke zu einem oder bevorzugt mehreren Auslässen geführt und durch diesen/diese hindurchgepresst/extrudiert. Optional kann in einer Dekompressionszone vor dem einen oder den mehreren Auslässen über einen Entgasungs-Dom der verdichteten Masse das Wasser entzogen werden. Auf diese Weise wird die verdichtete Masse zu einem oder mehreren Granulat-Strängen geformt.

### Schritt c

In Schritt c) werden die Granulatstränge getrocknet und ausgehärtet. Dies kann zum Beispiel durch Trocknung mittels Belüftung/Ventilation oder Luftentfeuchter geschehen. In manchen Ausführungsformen wird das Produkt in eine "Cooling und Cutter"-Maschine eingeführt, wo es durch Ventilatoren getrocknet und dadurch gehärtet wird. Die Härtung kann aber auch mittels Wärme stattfinden. Dies kann alternativ oder zusätzlich zur Härtung mittels Belüftung/Ventilation geschehen. In manchen Ausführungsformen wird die Härtung mittels Wärme in einem Heiztunnel durchgeführt. Der Temperaturbereich liegt hierbei zwischen 25 °C und 100 °C, bevorzugt zwischen 45 °C und 90 °C, noch bevorzugter bei 85 °C. In manchen Ausführungsformen wird die Härtung mittels Luftentfeuchter gehärtet. Es ist jedoch stets darauf zu achten, dass das Granulat eine Restfeuchte von 10-30%, bevorzugt 15-22% behält.

### Schritt d

In Schritt d) werden die Granulatstränge aus Schritt c) mit Hilfe rotierender Klingen zu Granulat geschnitten. Optional werden die dazu verwendeten Klingen mit Wasser gekühlt. Das Granulat ist würfel-, oder zylinderförmig oder kann zu Plättchen oder Flakes geschnitten werden.

### Optional Schritt d) vor Schritt c)

In einer alternativen Ausführungsform der Erfindung wird der Granulatstrang nach Schritt b) zunächst in die gewünschte Länge zu Granulat geschnitten und dann erst getrocknet .Die Verfestigung kann beispielsweise in einem Trocknungstunnel oder durch Ventilatoren erfolgen. Das Ergebnis ist ein Granulat in Zylinder-, Perlen- oder Linsenform. Auch hier ist auf eine Restfeuchte von 10-30%, bevorzugt 15-22% des Granulats zu achten.

### Weitere optionale Schritte

Das Verfahren kann zudem die Bestrahlung des Granulats oder Produktes zur Sterilisation mit UV-Licht umfassen.

Das fertige Granulat kann anschließend in Säcke, Boxen oder andere Gebinde verpackt und transportiert werden.

### Verfahren zur Weiterverarbeitung des Granulats zu Ersatz von Knochen, Gräten oder Schalen von Meeresfrüchten

Das hierin beschriebene Granulat kann ohne weitere Vorbehandlung oder Zugabe weiterer Rohstoffe sofort zu einem Endprodukt verarbeitet werden. Das bereitgestellte Granulat ist somit ein "ready-to-use" Produkt.

Das Verfahren der Weiterverarbeitung des Granulats zu Ersatz von Knochen, Gräten oder Schalen von Meeresfrüchten erfolgt unabhängig vom Verfahren zur Herstellung des Granulats. Es kann somit direkt im Anschluss an das Verfahren zur Herstellung des Granulats erfolgen. Es kann aber auch zu einem späteren Zeitpunkt erfolgen. Das Granulat kann bis zur Weiterverarbeitung Verpackt, verschickt und/oder gelagert werden.

Das Verfahren der Weiterverarbeitung des Granulats zu Ersatz von Knochen, Gräten oder Schalen von Meeresfrüchten umfasst die Schritte:
a) Füllen des hergestellten oder gelagerten Granulats in eine Spritzguss-Anlage
b) Formen der Knochen, Gräten oder Schalen für Meeresfrüchte im Spritzguss
c) Auswerfen der ausgekühlten und erstarrten Formen.

Einem Granulat das noch keine Zusätze wie Farbstoffe, Aromen, Düfte oder Stearate, enthält, können diese Zusätze dem Granulat auch bei der Weiterverarbeitung hinzugefügt werden. Somit können aus einem "Standard-Granulat" Produkte mit unterschiedlichen Farben oder, Gerüchen hergestellt werden. Die Zusätze werden zusammen mit dem Granulat in den Einfülltrichter der Spritzgießmaschine oder des Extruders gegeben.

Je nach gewünschtem Produkt wird eine Verarbeitung des Granulats mittels Spritzgießtechnik unter Verwendung von herkömmlichen Spritzgießmaschinen gewählt. Bekannte Spritzgießmaschinenhersteller sind beispielsweise KraussMaffei, Arburg, Engel und Wittmann Battenfeld.

Entscheidend für die problemlose Weiterverarbeitung ohne Beimischung zusätzlicher Bestandteile wie Wasser oder sonstige Lösungsmittel ist die Restfeuchte des Granulats der Vorliegenden Erfindung. Das Granulat muss dabei eine Restfeuchte von 10-40%, bevorzugt 18-22%, am bevorzugtesten 20% aufweisen. Eine Restfeuchte des Granulats in diesem Bereich resultiert in einer optimalen Verdichtung und Homogenisierung des Granulats im weiteren Herstellungsprozess zu den gewünschten Produkten. Eine höhere Restfeuchte im Granulat führt zu einer schmierigen Masse im weiteren Herstellungsprozess von aus dem Granulat hergestellten Produkten welche den Schneckenkanal in der Spritzgießmaschine verstopfen. Dies führt zu Rückstau und Produktionsstopp. Eine zu geringe Restfeuchte bewirkt, dass sich das Granulat-Material in der Spritzgießmaschine nicht vernetzt. Daraus resultiert, dass sich das Material verzieht, sich nicht verdichtet und somit kein stabiles Produkt entsteht. Zudem wird keine glatte Oberfläche erzeugt. Es ist darauf hinzuweisen, dass anders wie bei Kunststoffgranulat, das Granulat der vorliegenden Erfindung nicht schmilzt sondern durch hohen Druck in der Spritzgießmaschine oder dem Extruder im Schneckenkanal formverändert und vernetzt wird. Die Restfeuchte im Granulat kann dementsprechend Unterschiede im erzeugten Produkt hervorrufen. Ein Einziehen von erfindungsgemäßem Granulat in die Schnecke gestaltet sich bei Granulat mit einer Restfeuchte von 10-30%, bevorzugt 15-22% als problemlos. Auch die Zykluszeiten im Formungsprozess werden durch eine Restfeuchte von 15-22% optimal verkürzt, wodurch erhebliche Zeitersparnis im Formungsprozess erzielt werden kann.

### Spritzgießen

Nahezu jegliche Form und Größe des Produktes kann durch Spritzgießen erreicht werden. Eine herkömmliche Spritzgießmaschine (Schneckenkolbenspritzgießmaschine) besteht aus zwei Einheiten, der Spritzeinheit bzw. Plastifiziereinheit, welche das Granulat plastifiziert, aufbereitet und dosiert, und der Schließeinheit, die das Formwerkzeug schließt, zuhält und wieder öffnet. Die Spritzeinheit setzt sich im Wesentlichen aus einem waagerechten Plastifizierzylinder und einer darin befindlichen Schnecke zusammen. Die Schnecke rotiert und ist auch axial im Zylinder beweglich. Am vorderen Ende des Plastifizierzylinders befindet sich ein Einfülltrichter zum Einfüllen des Rohmaterials, im vorliegenden Fall des Granulats, am anderen Ende befindet sich die Düse, welche den Übergang zum Formwerkzeug bzw. der Schließeinheit darstellt.

Das Granulat der Erfindung wird zunächst in den Einfülltrichter und anschließend über den Einzug in die Gänge der Spritzgießmaschine gerieselt. Der Einfülltrichter kann ein normaler Trichter aber auch ein Rührtrichter oder ein unter Vibration gesetzter Trichter sein. Das Granulat wird durch eine sich drehende Schnecke in Richtung Schneckenspitze gefördert und durch die Wärme des Zylinders und die Friktionswärme, die beim Zerteilen und Scheren des Materials entsteht erwärmt. Wie unten genauer erläutert wird das Material hierbei nicht aufgeschmolzen, wie es etwa bei Kunststoffgranulat passieren würde. Das vorliegende Material wird in sich vernetzt und verdichtet und sammelt sich vor der Schneckenspitze, wenn die Düse geschlossen ist. Da die Schnecke axial beweglich ist, weicht sie durch den Druck der sich an der Spitze sammelnden Masse zurück. Die Rückwärtsbewegung wird mechanisch oder elektrisch gebremst, sodass sich im Material ein Staudruck aufbaut. Dieser Staudruck in Verbindung mit der Schneckenrotation verdichtet und homogenisiert das Material um ein weiteres. Sobald sich für das Werkstückvolumen ausreichende Masse angesammelt hat, ist der Dosiervorgang beendet und das verdichtete Material wird unter hohem Druck durch die Düse und den Anguss bzw. das Angusssystem des Spritzgießwerkzeugs in den formgebenden Hohlraum gedrückt. Eine direkte Einspritzung ohne Anguss ist auch verwirklichbar.

Wichtig bei der Durchführung des Verfahrens zur Verarbeitung des vorliegenden Granulates ist die Temperatur der Plastifizierschnecke und den anderen Bauteilen der Spritzgießmaschine. Der Einfülltrichter ist nicht temperiert. Der Einzug sollte auf 45°C vorgewärmt sein. Bei einer Temperatur von 50°C und 100°C erweicht das Granulat und ist bearbeitbar. Die bevorzugte Durchschnittstemperatur bei der Weiterverarbeitung von erfindungsgemäßem Granulat liegt bei 75°C. Der Zylinder in dem sich der Schneckenkanal befindet, wird von mehreren aufeinanderfolgenden optional unterschiedlich temperierten Heizbändern umschlossen. Zwischen 50°C und 100°C ist eine Vernetzung und Verdichtung des Materials gegeben. Daher wird der Schneckenkanal bevorzugt von vier Heizbändern umschlossen, welche von Richtung Einfülltrichter bis Schneckenspitze bevorzugt aufeinanderfolgende Temperaturen von 45°C, 70°C, 80°C, 90°C aufweisen. Eine Abweichung von jeweils mehr als +/- 15% ist nicht vorteilhaft und sollte vermieden werden. Je nach Zusammensetzung des Granulats hat aber eine Temperaturabweichung im Rahmen der +/- 15% keine negativen Auswirkung auf die Materialeigenschaften des entstehenden Produktes. Bei manchen Ausführungsformen haben die drei Heizbänder von Richtung Einfülltrichter bis Schneckenspitze aufeinanderfolgende Temperaturen von 90°C, 80°C, 70°C.

Bei der Verarbeitung des Granulats in einem Temperaturbereich zwischen 50°C und 100°C entsteht ein "Glas-Übergang" wobei ein Übergang von einem zähflüssigen und gummielastischen Material in flexiblem Zustand zu einem glasigen und harten Zustand erfolgt. Dieser Übergang wird durch Temperatur aber auch durch Friktion und Scherung der Schnecke hervorgerufen. Die Restfeuchte im Granulat hat Auswirkungen auf diesen Glas-Übergang. Erhöhte Restfeuchte im Material verzögert den Übergang und verlängert somit den Herstellungsprozess. Eine Temperatur von über 90°C sollte vermieden werden. Bei einer Temperatur über 90°C kann es zu einem "Verziehen" der Oberfläche des Produkts, sowie auch dem ganzen Produkt kommen. Bei Temperaturen zwischen 100°C und 130°C war ein Verzug im Produkt deutlich sichtbar. Ab einer Temperatur von etwa 100°C entstehen im erweichten und sich vernetzenden Material Wasserdampf und Gase, wodurch sich das Material nicht optimal verarbeiten lässt. Es entstehen Risse im Produkt. Ab etwa 130°C ist ein stark verbrannter Geruch bei der Verarbeitung und eine bräunliche Verfärbung des Endprodukts festzustellen. Eine thermische Zersetzung beginnt bei ca. 275°C. Die optimale Verarbeitungstemperatur des vorliegenden Granulats liegt bei 80°C bis 90°C.

Die Schneckengeometrie hat Einfluss auf die Dichte des Materials und kann daher eine entscheidende Rolle für die Stabilität und Struktur des aus dem Granulat erzeugten Produkts spielen. Die Schnecke ist bevorzugt im Einfüllbereich dünner und wird zur Düse hin dicker. Somit verdichtet sich das Material zusätzlich.

Das verdichtete Material wird anschließend durch die Düse über den Anguss in ein Formwerkzeug gepresst. Die Düse sollte bevorzugt eine Temperatur von 80°C-180°C aufweisen. Da das verdichtete Material verhältnismäßig kurz in Kontakt mit der Düse und der dadurch zugeführten Hitze kommt, hat diese keine negative Auswirkung auf das Material. Optimal ist aber eine Düsen-Temperatur von 85-95°C. Die Düsentemperatur kann für dickwandige Produkte (>10mm) auch höher liegen, etwa bei 165°C.

Während der "Einspritzung" des verdichteten Materials in die Form bzw. das Werkzeug wird die Masse unter hohem Druck durch die geöffnete Düse und einen Anguss oder ein Angusssystem in den formgebenden Hohlraum gepresst. Der Anguss ist der Teil des Werkzeugs, welcher nicht zur letztendlichen Form gehört und dient als Zuführungskanal zum formgebenden Hohlraum. Ein Erhitzen des formgebenden Werkzeugs ist vorteilhaft für die Qualität des entstehenden Produktes. Ein Erhitzen der Form/des Werkzeugs auf zwischen 60 und 85°C, bevorzugt 65°C, führt zu einer optimalen Oberflächenstruktur des erzeugten Produkts. Unter Verwendung einer nicht aufgewärmten Form können sich Flecken auf der Oberfläche des Produkts bilden. Zudem ist bei Verwendung von kalten Formen die Oberflächenstruktur des erzeugten Produkts etwas rauer als bei der Verwendung von vorgewärmten Formen. Der Anguss lässt sich aufgrund der Eigenschaften des vernetzten Materials, vor allem aufgrund einer Restfeuchte von 10-13% nur schwer lösen. Daher sollte die Angusspartie nicht zu eng sein und eventuell speziell beschichtet sein. Eine Angusspartie aus Edelstahl ergab sich hier als bevorzugt, wohingegen eine Angusspartie aus Aluminium nicht optimal war. Auch eine Nanobeschichtung der Edelstahl-Angusspartie war vorteilhaft. Für kleinere Formteile hat sich eine direkte Einspritzung ohne Anguss als vorteilhaft erwiesen. Ferner konnten beobachtet werden, dass sich die Produkte besonders leicht aus Werkzeugen/Formen lösen, die eine Oberflächenbeschichtung aus Teflon, Keramik oder nanotechnologischen Lösungen aufweisen.

Zum Vergleich, in der Kunststoff-verarbeitenden Industrie wird das Kunststoffgranulat typischerweise bei zwischen 200°C und 300°C zum Schmelzen gebracht und in ein 20°C bis 120°C warmes Werkzeug gepresst. Das Temperaturgefälle ist hier also deutlich größer.

Nach dem die Einspritzung und Ausfüllung der Form mit dem verdichteten Material vollendet ist, hat auch der Zeitraum, über welchen sich das Produkt in der Form befindet Auswirkung auf das Produkt. Bei niedrigen Temperaturen in der Form sind auch bei längeren Zykluszeiten ab etwa 20 Sekunden negative optische und funktionale Merkmale im Produkt zu erkennen. Bei vorgewärmten Formen ist eine Zykluszeit von 4-16 Sekunden optimal. Die kurze Zykluszeit von 4-16 Sekunden ist demnach vorteilhaft für die Gesamtdauer des Herstellungsverfahrens sowie für die optischen und funktionalen Eigenschaften des Produkts. Allerdings ist darauf hinzuweisen, dass sich dieses Zeitfenster aufgrund der Eigenschaften der Form, wie etwa das Volumen der Form, verändern kann.

Aufgrund einer Restfeuchte von meist 5-15%, bevorzugt 5-10% im gespritzten Produkt (vor Trocknung) ist, wie beim Abkühlen eines Thermoplasten auch, eine Volumenschwindung zu beobachten. Ein "Nachdrücken" wie bei der Kunststoffverarbeitung, d.h. ein Nachfüllen des Materials unter Druck bis der Siegelpunkt erreicht ist, d.h. bis der Anguss erstarrt ist, ist nicht unbedingt notwendig. Kann jedoch bei speziellen Formteilen angewendet werden. Stattdessen sollte beim Erstellen einer Gussform ein höheres Volumen einkalkuliert werden, sodass das endgültig ausgetrocknete Produkt auch die gewünschten Maße annimmt.

Beim Abkühlen bzw. Trocknen des aus Granulat hergestellten Produktes erfolgt eine Kristallisation. Im Gegensatz zum Kunststoff-enthaltenden Thermoplasten gibt es keinen "Peak", da es kein klassisches Schmelzen des Materials gibt.

### Ersatz für Knochen, Gräten und Schalen für Meeresfrüchte und deren Eigenschaften

Die vorliegende Erfindung bezieht sich auch auf ein biologisch abbaubares und kompostierbares Produkt, einen Ersatz für Knochen, Gräten und Schalen von Meeresfrüchten. Die aus Granulat hergestellten Produkte enthalten dieselbe Feststoffzusammensetzung wie das Granulat selbst. Die Restfeuchte im Granulat verdampft größtenteils. Die fertigen Knochenprodukte enthalten eine Restfeuchte von 5%, bevorzugt 4%, 3%; 2% oder 1%. Am bevorzugtesten enthalten die Knochenprodukte keine Restfeuchte.

Der Ersatz für Knochen, Gräten und Schalen von Meeresfrüchten kann gefärbt sein oder ungefärbt.

Der Ersatz für Knochen, Gräten und Schalen von Meeresfrüchten kann geruchlos sein oder einen gewünschten Geruch oder Geschmack aufweisen. Bevorzugt hat der Ersatz für Knochen, Gräten und Schalen von Meeresfrüchten einen Geschmack nach (gebratenem) Knochen oder Rückenmark. Alternativ können die Gräten und Schalen einen Geschmack nach Fisch bzw. Fischmehl haben.

Der Ersatz für Knochen, Gräten und Schalen von Meeresfrüchten ist formstabil.

Die hierin beschriebenen Knochen, Gräten und Schalen für Meeresfrüchte können jede in der Natur vorkommende Knochen-, Gräten- bzw. Schalenform aufweisen.

Ganze Fleisch- bzw. Fischprodukte entstehen durch Verbinden von künstlichem Fleisch/Fisch in jeglicher Form mit dem Knochen. Der Fleisch-/Fischersatz wird entsprechend der gewünschten Form des Endprodukts, z.B. ein Hähnchenschlegel/Hähnchenschenkel, um den Knochen herum geformt.

Die erfindungsgemäßen Knochen, Gräten und Schalen von Meeresfrüchten werden für vegane oder vegetarische Fleisch- oder Fischersatzgerichte verwendet. Dies betrifft Lebensmittel für den Menschen als auch Tierfutter.

Der Ersatz von Knochen, Gräten oder Schalen von Meeresfrüchten hat neben einer Restfeuchte von maximal 5% folgende Zusammensetzung des Feststoffanteils:

| | |
|---|---|
| Pflanzliche Stärke und/oder | |
| Pflanzliches Mehl | 40-50% |
| Dickungs- und/oder | |
| Geliermittel | 40-50% |
| Optionale Zusätze | 0-20% |

Der Ersatz von Knochen, Gräten oder Schalen von Meeresfrüchten hat neben einer Restfeuchte von maximal 5% bevorzugt folgende Zusammensetzung des Feststoffanteils:

| | |
|---|---|
| Pflanzliche Stärke und/oder | |
| Pflanzliches Mehl | 45-50% |
| Dickungs- und/oder | |
| Geliermittel | 45-50% |
| Optionale Zusätze | 0-10% |

Der Ersatz von Knochen, Gräten oder Schalen von Meeresfrüchten hat neben einer Restfeuchte von maximal 5% besonders bevorzugt folgende Zusammensetzung des Feststoffanteils:
Variante A:

| | |
|---|---|
| Weizen stärke | 50% |
| Guarkernmehl | 45% |
| Xanthan Gum | 5% |

Variante B:

| | |
|---|---|
| Weizen stärke | 45% |
| Guarkernmehl | 40% |
| Xanthan Gum | 5% |
| Rapswachs | 5% |
| Naturkautschuk Pulver | 5% |

Variante C:

| | |
|---|---|
| Weizen stärke | 45% |
| Guarkernmehl | 40% |
| Xanthan Gum | 5% |
| Naturkautschuk Pulver | 10% |

Variante D:

| | |
|---|---|
| Weizen stärke | 45% |
| Tapiokastärke | 40% |
| Reismehl | 5% |
| Zellstoff | 10% |

Variante E:

| | |
|---|---|
| Weizen stärke | 45% |
| Guarkernmehl | 40% |
| Xanthan Gum | 5% |
| Strohfasern | 10% |

Variante F:

| | |
|---|---|
| Weizen stärke | 40% |
| Guarkernmehl | 35% |
| Xanthan Gum | 5% |
| Strohfasern | 10% |
| Rapswachs | 5% |
| Naturkautschuk | 5% |

Variante G:

| | |
|---|---|
| Weizen stärke | 40% |
| Guarkernmehl | 55% |
| Xanthan Gum | 5% |

Variante H:

| | |
|---|---|
| Maisstärke | 20% |
| Agar Agar | 75% |
| Xanthan Gum | 5% |

Variante I:

| | |
|---|---|
| Maisstärke: | 45% |
| Guarkernmehl: | 40% |
| Xanthan Gum: | 5% |
| Holzstoff: | 9% |
| Magnesiumstearat: | 1% |

Variante J:

| | |
|---|---|
| Weizenmehl: | 50% |
| Guarkernmehl: | 45% |
| Xanthan Gum: | 5% |

Variante K:

| | |
|---|---|
| Weizen stärke: | 25% |
| Weizenmehl: | 25% |
| Guarkernmehl: | 45% |
| Xanthan Gum: | 5% |

Variante L

| | |
|---|---|
| Weizen stärke | 50% |
| Guarkernmehl | 45% |
| Xanthan Gum | 5% |

Diese Variante enthält ferner Spuren von Glycerin und Eisenbisglycinat und ist gefärbt.

### VI. Beispiele

Die vorliegende Erfindung wird durch die nachfolgenden, nicht einschränkenden Beispiele detailliert beschrieben.

### Beispiel 1: Herstellung von Granulat, Variante A eines daraus hergestellten Knochen

Das Ausgangsmaterial zur Herstellung des Granulats bestand aus:

| | |
|---|---|
| Weizen stärke | 50% |
| Guarkernmehl | 45% |
| Xanthan Gum | 5% |
| Bezogen auf das Gewicht dieser Masse Zugabe von | |
| Wasser | 40% |
| Pflanzliches Glycerin | 5% |
| Rapsöl | 4% |

Zunächst wurden feste Bestandteile und flüssige Bestandteile getrennt voneinander gemischt. Dann erfolgte das Mischen der festen und flüssigen Bestandteile zu einer pulverigen Mischung (ca. 10 - 15 min).

Anschließend wurde die noch pulverige Masse über einen Trichter und Einzug (45°C) in einen Extruder gegeben. Diese Schnecke im Extruder zog die erzeugte Mischung ein, verdichtete und "plastifizierte" sie unter Energiezufuhr und sorgte gleichzeitig für eine homogene Masse. Der beheizte Kanal der Förderschnecke wurde mit fünf Heizelementen (in der Reihenfolge: 80C°, 105C°, 100C°, 95°C, 90C°) erhitzt. Die Förderschnecke transportierte die Masse zu den Auslässen wo die Masse herausgepresst wurde. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor dem Schnitt reinigten. So wurde ein linsenförmiges Granulat erzeugt. Im Anschluss härtete das Granulat für 2 Tage aus und wurde schließlich endgültig verpackt.

Das fertige Granulat hat eine Restfeuchte von 15-20% und eine Feststoffzusammensetzung aus

| | |
|---|---|
| Weizen stärke | 50% |
| Guarkernmehl | 45% |
| Xanthan Gum | 5% |

Im Folgenden wurde das erzeugte Granulat über einen Einfülltrichter über den Einzug in die rotierende Schnecke eingefüllt. Darin wurde das Granulat durch die Rotation der sich im Zylinder befindlichen Schnecke in Richtung Schneckenspitze befördert. Hierbei entstand durch Zerteilen und Scheren des Granulats eine Friktionswärme, die zusammen mit der Beheizung des Zylinders durch Heizbänder für die Deformierung des Granulats und ein Homogenisieren der Masse sorgte. Zur Verfügung stand uns ein 2-fach Werkzeug mit einem Unterfluranguss. Das Werkzeug wurde auf 85°C temperiert, die Düse auf 90°C, der Zylinder bereichsweise auf 90°C, 80°C und 70°C der Einzug auf 45°C.

Im weiteren Prozess-Verlauf staute sich die homogenisierte Masse an der Schneckenspitze, wo sich die Auslassdüse befindet, die zu diesem Zeitpunkt geschlossen war. Dadurch entstand Druck auf die Schnecke. Da diese axial beweglich ist, schraubte sie sich unter diesem Druck rückwärts aus der homogenisierten Masse heraus. Durch einen Hydraulikzylinder oder mittels elektrischer Steuerung wurde die Rückwärtsbewegung der Schnecke gebremst. Dadurch entstand in der homogenisierten Masse Staudruck. Durch diesen Staudruck in Verbindung mit der Rotation der Schnecke wurde die homogenisierte Masse stark verdichtet und weiter homogenisiert.

Sobald sich eine für das Volumen des zu fertigenden Werkstücks ausreichende Menge an verdichteter Masse in der Schneckenspitze vor der Auslassdüse angesammelt hat, wurde die Rotation der Schnecke eingestellt und der Dosiervorgang beendet.

Daraufhin erfolgte das Anfahren der Spritzeinheit enthaltend das Werkzeug an die Schließeinheit. Sie wurde an die Auslassdüse angedrückt und die Schnecke wurde zeitgleich rückseitig unter Druck gesetzt. Hierbei entstand ein Druck von um die 1.200 bar, mit dessen Hilfe die verdichtete Masse durch die Auslassdüse über das Angusssystem des Werkzeugs in den Hohlraum des Werkzeugs gedrückt wurde.

In der Form härtete das Material aus und erstarrte schließlich. Dann öffnete sich die Auswerferseite des Werkzeugs. Dabei drangen Stifte in die Kavität des Werkzeugs ein und drückten das Formteil aus der Form (Zwangsentformung). Es fiel nun in einen bereitstehenden Behälter. Die gespritzten Teile zeigten eine sehr glatte Oberfläche aber waren aufgrund des sehr hohen Wasseranteils noch sehr flexibel. Der Anguss wurde automatisch abgetrennt. Die hergestellten Formteile liefen anschließend durch einen Trocknungstunnel (Umluft: 85 C°) für 20 Minuten bei einer Länge von 20 Meter durch. Die Restfeuchte wurde den Formteilen auf unter 5%, bevorzugt vollständig entzogen. Die Formteile haben die Form eines gewünschten Knochens/ die Form von Gräten, die Form eines Fischskeletts, oder die Form von speziellen Schalen von Meeresfrüchten.

Letztlich wurde das Produkt gesammelt und verpackt.

### Beispiel 2: Herstellung von Granulat, Variante B

Das Ausgangsmaterial für das Granulat bestand aus:

| | |
|---|---|
| Weizen stärke | 45% |
| Guarkernmehl | 40% |
| Xanthan Gum | 5% |
| Rapswachs | 5% |
| Naturkautschuk Pulver | 5% |
| Bezogen auf das Gewicht dieser Masse Zugabe von | |
| Wasser | 30% |
| Pflanzliches Glycerin | 5% |
| Rapsöl | 4% |

Zunächst wurden feste Bestandteile und flüssige Bestandteile getrennt voneinander gemischt. Dann erfolgte das Mischen der festen und flüssigen Bestandteile zu einer pulverigen Masse (ca. 10 - 15 min).

Anschließend wurde die noch pulverige Masse über einen Trichter und Einzug (45°C) in einen Extruder gegeben. Diese Schnecke im Extruder zog die erzeugte Mischung ein, verdichtete und "plastifizierte" sie unter Energiezufuhr und sorgte gleichzeitig für eine homogene Mischung. Der beheizte Kanal der Förderschnecke wurde mit fünf Heizelementen (in der Reihenfolge: 45C°, 75C°,100C°, 60C°, 20C°) erhitzt. Die Schnecke befördert die verdichtete Masse zu den Auslässen und presste sie heraus. Auf diese Weise wurde die Masse zu Strängen geformt und von einer rotierenden Klinge direkt am Ausstoß zu Granulat geschnitten. Hierbei durchlief die Klinge Bürsten, die Sie vor dem Schnitt reinigten. So wurde ein perlenförmiges Granulat erzeugt. Im Anschluss härtete das Granulat mittels Luftentfeuchter für 1 Tag aus und wurde schließlich endgültig verpackt.

Das fertige Granulat hat eine Restfeuchte von 15-20% und eine Feststoffzusammensetzung aus

| | |
|---|---|
| Weizen stärke | 45% |
| Guarkernmehl | 40% |
| Xanthan Gum | 5% |
| Rapswachs | 5% |
| Naturkautschuk | 5% |

Das fertige Granulat wird gemäß Beispiel 1 im Spritzguss zu Knochen, Gräten oder Schalen weiterverarbeitet.

### Beispiel 3: Herstellung von Granulat, Variante F, und eines daraus hergestellten Knochen

Das Ausgangsmaterial für das Granulat bestand aus:

| | |
|---|---|
| Weizen stärke | 40% |
| Guarkernmehl | 35% |
| Xanthan Gum | 5% |
| Strohfasern | 10% |
| Rapswachs | 5% |
| Naturkautschuk Pulver | 5% |
| Bezogen auf das Gewicht dieser Masse Zugabe von | |
| Wasser | 40% |
| Pflanzliches Glycerin | 5% |
| Rapsöl | 4% |

Zunächst wurden feste Bestandteile und flüssige Bestandteile getrennt voneinander gemischt. Dann erfolgte das Mischen der festen und flüssigen Bestandteile zu einer pulverigen Masse (ca. 10 - 15 min).

Anschließend wurde die noch pulverige Masse direkt in einen Extruder gegeben. Dieser zog die erzeugte Masse ein, verdichtete und "plastifizierte" sie unter Energiezufuhr und sorgte gleichzeitig für eine homogene Mischung. Der beheizte Kanal der Förderschnecke wurde mit fünf Heizelementen (in der Reihenfolge: 40C°, 80C°, 100C°, 60C°, 21C°) erhitzt, führte die Masse zu den Auslässen und presste die Masse heraus. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor den Schnitt reinigten. So wurde ein linsenförmiges Granulat erzeugt. Im Anschluss härtete das Granulat für 2 Tage aus und wurde schließlich endgültig verpackt.

Das fertige Granulat hat eine Restfeuchte von 15-20% und eine Feststoffzusammensetzung aus

| | |
|---|---|
| Weizen stärke | 40% |
| Guarkernmehl | 35% |
| Xanthan Gum | 5% |
| Strohfasern | 10% |
| Rapswachs | 5% |
| Naturkautschuk | 5% |

Das fertige Granulat wird gemäß Beispiel 1 im Spritzguss zu Knochen, Gräten oder Schalen weiterverarbeitet.

### Beispiel 4: Herstellung von Granulat, Variante L, und eines daraus hergestellten Hähnchen-Knochens

Das Ausgangsmaterial für das Granulat bestand aus:

| | |
|---|---|
| Weizen stärke | 50% |
| Guarkernmehl | 45% |
| Xanthan Gum | 5% |
| Bezogen auf das Gewicht dieser Masse Zugabe von | |
| Wasser | 40% |
| Pflanzliches Glycerin | 5% |
| Rapsöl | 4% |
| Pflanzlicher Farbstoff | 0,25% |
| Pflanzliches | |
| Eisenbisglycinat | 1% |

Zunächst wurden feste Bestandteile und flüssige Bestandteile getrennt voneinander gemischt. Dann erfolgte das Mischen der festen und flüssigen Bestandteile zu einer pulverigen Masse (ca. 10 - 15 min).

Anschließend wurde die noch pulverige Masse direkt in einen Extruder gegeben. Dieser zog die erzeugte Masse ein, verdichtete und "plastifizierte" sie unter Energiezufuhr und sorgte gleichzeitig für eine homogene Mischung. Der beheizte Kanal der Förderschnecke wurde mit fünf Heizelementen (in der Reihenfolge: 40C°, 80C°, 100C°, 60C°, 21C°) erhitzt, führte die Masse zu den Auslässen und presste die Masse heraus. Auf diese Weise wurde die Masse zu Strängen geformt und auf einem Förderband durch Ventilatoren abgekühlt. Die erzeugten Stränge wurden nun mit einer rotierenden Klinge zu Granulat geschnitten. Hierbei durchlief die Klinge Bürsten, die Sie vor den Schnitt reinigten. So wurde ein linsenförmiges Granulat erzeugt. Im Anschluss härtete das Granulat für 2 Tage aus und wurde schließlich endgültig verpackt.

Das fertige Granulat hat eine Restfeuchte von 15-20% und eine Feststoffzusammensetzung aus etwa

| | |
|---|---|
| Weizen stärke | 50% |
| Guarkernmehl | 45% |
| Xanthan Gum | 5% |

und enthält Spuren von Glycerin, Eisenbisglycinat sowie Farbstoff.

Im Folgenden wurde das erzeugte Granulat über einen Einfülltrichter über den Einzug in die rotierende Schnecke eingefüllt. Darin wurde das Granulat durch die Rotation der sich im Zylinder befindlichen Schnecke in Richtung Schneckenspitze befördert. Hierbei entstand durch Zerteilen und Scheren des Granulats eine Friktionswärme, die zusammen mit der Beheizung des Zylinders durch Heizbänder für die Deformierung des Granulats und ein Homogenisieren der Masse sorgte. Zur Verfügung stand uns ein 2-fach Werkzeug mit einem Unterfluranguss. Das Werkzeug wurde auf 35°C temperiert, die Düse auf 165°C, der Zylinder bereichsweise auf 90°C, 80°C und 70°C der Einzug auf 45°C.

Im weiteren Prozess-Verlauf staute sich die homogenisierte Masse an der Schneckenspitze, wo sich die Auslassdüse befindet, die zu diesem Zeitpunkt geschlossen war. Dadurch entstand Druck auf die Schnecke. Da diese axial beweglich ist, schraubte sie sich unter diesem Druck rückwärts aus der homogenisierten Masse heraus. Durch einen Hydraulikzylinder oder mittels elektrischer Steuerung wurde die Rückwärtsbewegung der Schnecke gebremst. Dadurch entstand in der homogenisierten Masse Staudruck. Durch diesen Staudruck in Verbindung mit der Rotation der Schnecke wurde die homogenisierte Masse stark verdichtet und weiter homogenisiert.

Sobald sich eine für das Volumen des zu fertigenden Werkstücks ausreichende Menge an verdichteter Masse in der Schneckenspitze vor der Auslassdüse angesammelt hat, wurde die Rotation der Schnecke eingestellt und der Dosiervorgang beendet. Zeitgleich erfolgte eine aktive Entlastung der Schnecke, um eine Dekomprimierung der Schmelze herbeizuführen.

Daraufhin erfolgte das Anfahren der Spritzeinheit enthaltend das Werkzeug an die Schließeinheit. Sie wurde an die Auslassdüse angedrückt und die Schnecke wurde zeitgleich rückseitig unter Druck gesetzt. Hierbei entstand ein Druck von um die 1.200 bar, mit dessen Hilfe die verdichtete Masse durch die Auslassdüse über das Angusssystem des Werkzeugs in den Hohlraum des Werkzeugs gedrückt wurde. Die Formteile haben die Form eines gewünschten Knochens.

In der Form eines z.B. Hähnchenknochens härtete das Material aus und erstarrte schließlich. Hierbei öffnete sich die Auswerfer Seite des Werkzeugs. Dabei drangen Stifte in die Kavität des Werkzeugs ein und drückten das Formteil aus der Form (Zwangsentformung). Die gespritzten Knochen fielen nun in einen bereitstehenden Behälter. Die gespritzten Knochen zeigten eine sehr glatte Oberfläche. Der Anguss wurde automatisch abgetrennt. Die hergestellten Formteile liefen anschließend durch einen Trocknungstunnel (Umluft: 85 C°) für 20 Minuten bei einer Länge von 20 Meter durch. Die Restfeuchte wurde den Knochen auf unter 5%, bevorzugt vollständig entzogen.

Optional wird der Knochen direkt weiterverarbeitet: Hierfür wurden die Knochen mittels eines Roboters unmittelbar nach Spritzguss-Härtung in eine zweite Form gelegt. Diese umspritzte/umwickelte den Knochen zu zwei Drittel mit einen veganen Hähnchen-Ersatzfleisch. Daraufhin warfen die Auswerfer den so hergestellten Hähnchen-Schenkel aus. Dabei drangen Stifte in die Kavität des Werkzeugs ein und drückten das Formteil aus der Form (Zwangsentformung). Es fiel nun in einen bereitstehenden Behälter. Die gespritzten Teile zeigten eine sehr gute Oberfläche, aber waren aufgrund des sehr hohen Wasseranteils noch sehr flexibel. Der Anguss wurde automatisch abgetrennt.

Letztlich wurden die Hähnchenknochen/Schenkel dosiert und verpackt.

### Beispiel 5: Stabilität eines erfindungsgemäßen Ersatzes für Knochen in Wasser

Ein erfindungsgemäßer Ersatz für Knochen wurde komplett in ein Behältnis mit Wasser gegeben wobei die Zeit bis zum ersten Aufquellen des Materials gemessen wurde. Der Knochen quoll nach 2h leicht auf, war jedoch 38h formstabil.

### Beispiel 6: Stabilität eines erfindungsgemäßen Ersatzes für Knochen in Verbindung mit Fleischersatz

Ein erfindungsgemäßer Ersatz für Knochen wurde mit Fleischersatz umgeben, um einen veganen Hähnchenschlegel zu bilden. Der Wasseranteil im Fleischersatz ist gering. Nach einem leichten, nur oberflächlichen Aufweichen des Knochens trocknet dieser wieder und verbindet sich somit hervorragend mit dem Fleischersatz.

## Patentansprüche

1. Ersatz für Knochen, Gräten und Schalen von Meeresfrüchten, wobei der Ersatz vegan ist und wobei der Ersatz aus rein pflanzlichen Materialien besteht.

2. Ersatz für Knochen, Gräten und Schalen von Meeresfrüchten nach Anspruch 1, wobei der Ersatz eine Zusammensetzung bestehend aus
| | |
|---|---|
| Pflanzliche Stärke und/oder | |
| Pflanzliches Mehl | 40-50% |
| Pflanzliches Dickungs- und/oder | |
| Geliermittel | 40-50% |
| Optionale pflanzliche Zusätze aufweist. | 0-20% |

3. Ersatz für Knochen, Gräten und Schalen von Meeresfrüchten nach Anspruch 1 oder 2, wobei die pflanzliche Stärke native, unbehandelte Stärke ist und Weizenstärke, Kartoffelstärke, Maisstärke, Tapiokastärke oder Stärke aus Maniok, Knollenbohne, Batate, Yamswurzel, Knollen-Platterbse, Arakacha, Knolligem Sauerklee, Knolliger Kapuzinerkresse, Ulluco, Ostindischer Pfeilwurz, Pfeilwurz, Achira, Taro, Tannia, Weißer Seerose, Gelber Teichrose oder Chayote oder eine Mischung, bevorzugt Weizenstärke, Kartoffelstärke, Maisstärke, Reisstärke, Tapiokastärke oder eine Mischung davon, bevorzugt Weizenstärke, Kartoffelstärke oder Maisstärke umfasst und wobei das pflanzliches Mehl, natives unbehandeltes Mehl ist und Weizenmehl, Kartoffelmehl, oder Maismehl umfasst.

4. Ersatz für Knochen, Gräten und Schalen von Meeresfrüchten nach einem der vorherigen Ansprüche, wobei das Dickungs- und/oder Geliermittel Guarkernmehl, Xanthan Gum, Teufelszunge, Agar-Agar, Pektin, Carrageen, Alginat, Johannisbrotkernmehl, Sago, Gummi Arabicum, Reismehl, Hartweizenmehl oder Hartweizengrieß oder eine Mischung davon, bevorzugt eine Mischung aus Guarkernmehl und Xanthan Gum umfasst.

5. Ersatz für Knochen, Gräten und Schalen von Meeresfrüchten nach einem der vorherigen Ansprüche, wobei die optionalen pflanzlichen Zusätze pflanzliches Glycerin und/oder Sorbit, Zellstoff, Holzstoff, pflanzliche Fasern, Wachs, Naturkautschuk, Biopolymer, pflanzliches Öl, Konservierungsstoffe, Essig, Lecithin, pflanzliches Stearat, Lebensmittelfarbe, Aromen, Duftstoffe und eine Mischung davon umfassen.

6. Ersatz für Knochen, Gräten und Schalen von Meeresfrüchten nach einem der vorherigen Ansprüche, wobei die optionalen Zusätze Grünkohl, Brokkoli, Rucola, Spinat, Mangold, Basilikum, Petersilie, Tofu, angereicherte Pflanzenmilch, kalziumreiches Mineralwasser, Nüsse umfassend Pistazien, Haselnüsse, Mandeln und Mandelmus, Getreide und Pseudogetreide wie Sesam und Tahin, Haferflocken, Hirse, Amarant, Quinoa, Mohn, Hülsenfrüchte wie Soja, Mungobohne, Kichererbse, weiße Bohne, und getrocknete Früchte umfassend Feigen und Aprikosen, sowie Extrakte aus diesen, bevorzugt Extrakte aus Spinat, Brokkoli, Sesam, Kürbiskernen oder Leinsamen umfassen.

7. Ersatz für Knochen, Gräten und Schalen von Meeresfrüchten nach einem der vorherigen Ansprüche, wobei der Ersatz gartenkompostierbar, optional ultrakompostierbar ist.

8. Ersatz für Knochen, Gräten und Schalen von Meeresfrüchten nach einem der vorherigen Ansprüche, wobei der Ersatz kein Bioplastik, keine chemisch veränderten (Bio-)Polymere umfassend biobasierte Polymere umfassend Polylactid (PLA), Polyhydoxyalkanoate (PHA), Polyhydroxybutyrat (PHB), und keine erdölbasierten Biopolymere umfasst.

9. Verwendung von Ersatz für Knochen, Gräten und Schalen von Meeresfrüchten für vegane oder vegetarische Fleischersatzgerichte oder Fischersatzgerichte.

10. Die Verwendung nach Anspruch 9, wobei das vegane oder vegetarische Fleischersatzgericht Chicken Wings, Hähnchenschlegel, T Bone Steak, Spareribs, Rippchen, Keulen und Haxen umfasst und wobei das Fischersatzgericht ganzen Fisch, Fischfilet und Meeresfrüchte umfasst, wobei die Meeresfrüchte Scampi, Garnelen, Langusten und Hummer umfassen.

11. Verfahren zur Herstellung von Ersatz für Knochen, Gräten oder Schalen von Meeresfrüchten umfassend die Schritte
1) Herstellung von Granulat umfassend die Schritte:
a) Herstellen einer Mischung bestehend aus festen und flüssigen Bestandteilen, wobei die Mischung besteht aus
| | |
|---|---|
| Pflanzliche Stärke und/oder Pflanzliches Mehl | 40-50% |
| Pflanzliches Dickungs- und/oder Geliermittel | 40-50% |
| Optionale pflanzliche Zusätze | 0-20% |
Bezogen auf das Gewicht der Masse zusätzlich:
| | |
|---|---|
| Flüssige Bestandteile umfassend optionale pflanzliche Zusätze Wasser | 0-20%, und 30-60%; |
b) Verdichten der Masse und Formen eines Strangs;
c) Aushärten und Entfeuchten des in Schritt 1)b) erzeugten Strangs, wobei im Strang eine Restfeuchte von 10-30%, bevorzugt 15-22% zurück bleibt;
d) Schneiden des in 1)c) erzeugten Strangs zu Granulat;
e) optional Lagern des in Schritt 1)d) hergestellten Granulats;
2) Herstellung von Knochen, Gräten oder Schalen von Meeresfrüchten im Spritzguss umfassend die Schritte
a) Füllen des Granulats aus Schritt 1) in eine Spritzguss-Anlage
b) Formen der Knochen, Gräten oder Schalen für Meeresfrüchte
c) Auswerfen der ausgekühlten und erstarrten Formen aus Schritt 2)b).

12. Verfahren nach Anspruch 11, wobei die Mischung in Schritt 1)a) aus:
| | |
|---|---|
| Weizenstärke | 50% |
| Guarkernmehl | 45% |
| Xanthan Gum | 5% |
Bezogen auf das Gewicht der Masse zusätzlich:
| | |
|---|---|
| Wasser | 40% |
| Pflanzliches Glycerin | 5% |
| Rapsöl | 4% |
| Pflanzlicher Farbstoff | 0,25% |
| Pflanzliches | |
| Eisenbisglycinat besteht. | 1% |

13. Verfahren nach Anspruch 11 oder 12, wobei Schritt 1)d) vor Schritt 1)c) erfolgt.

14. Verfahren nach einem der Ansprüche 11-13, wobei Schritte 1) und 2) getrennt von einender durchgeführt werden.

15. Verfahren zur Herstellung von Ersatz für Knochen, Gräten oder Schalen von Meeresfrüchten umfassend die Schritte
a) Bereitstellen von Granulat bestehend aus
| | |
|---|---|
| Pflanzliche Stärke und/oder Pflanzlichem Mehl | 40-50% |
| Pflanzliches Dickungs- und/oder Geliermittel | 40-50% |
| Optionale pflanzliche Zusätze | 0-20% |
mit einer Restfeuchte von 10-30%, bevorzugt 15-22%
b) Füllen des Granulats aus Schritt a) in eine Spritzguss-Anlage
c) Formen der Knochen, Gräten oder Schalen für Meeresfrüchte
d) Auswerfen der ausgekühlten und erstarrten Formen aus Schritt c).
